# EUROPEAN PATENT APPLICATION

(11) **EP 3 934 140 A1**
(43) Date of publication of application: **05.01.2022**
(21) Application number: 20772801.5
(22) Date of filing: 17.03.2020
(51) Int. Cl.: H04L 1/06

(54) **INFORMATION INDICATION METHOD AND DEVICE, AND DATA TRANSMISSION SYSTEM**

(30) Priority: 18.03.2019 CN 201910204864
(71) Applicant: Huawei Technologies Co., Ltd., Shenzhen, Guangdong 518129 (CN)
(72) Inventor: YU, Jian, Shenzhen, Guangdong 518129 (CN); GUO, Yuchen, Shenzhen, Guangdong 518129 (CN); HAN, Xiao, Shenzhen, Guangdong 518129 (CN)
(74) Representative: Pfenning, Meinig & Partner mbB
(86) International application number: PCT/CN2020/079773
(87) International publication number: WO 2020/187208

(57) **Abstract**

This application discloses an information indication method and apparatus, and a data transmission system, and relates to the application field of communications technologies. The method includes: generating a first physical layer protocol data unit PPDU, where the first PPDU includes a modulation and coding scheme MCS field, the MCS field is used to indicate an MCS of a first space-time stream group and a difference MCS of another space-time stream group, and the difference MCS of the another space-time stream group is used to determine an MCS of the another space-time stream group; and sending the first PPDU. In this application, data transmission overheads can be reduced, so that a structure of a data frame for indicating an MCS can be provided for a next-generation standard. This application is used for data transmission.

## Description

This application claims priority to Chinese Patent Application No. 201910204864.8 on March 18, 2019 and entitled "INFORMATION INDICATION METHOD AND APPARATUS, AND DATA TRANSMISSION SYSTEM", which is incorporated herein by reference in its entirety.

### TECHNICAL FIELD

This application relates to the application field of communications technologies, and in particular, to an information indication method and apparatus, and a data transmission system.

### BACKGROUND

The institute of electrical and electronics engineers (Institute of Electrical and Electronics Engineers, IEEE) 802.11 series protocols are usually used to transmit data in a wireless local area network (Wireless Local Area Network, WLAN). In a current standard of the 802.11 series protocols, a data frame transmitted by a transmit end to a receive end includes a space-time stream and a field used to indicate a modulation and coding scheme (Modulation and Coding Scheme, MCS) of the space-time stream. The current standard supports the transmit end in simultaneously transmitting a plurality of space-time streams, and supports a plurality of MCSs.

A next-generation standard of the 802.11 series protocols is under discussion. Compared with the current standard, the next-generation standard has a higher throughput, supports more space-time streams simultaneously transmitted by a transmit end, and supports more MCS types. However, because the next-generation standard supports more space-time streams and more MCS types than the current standard, a structure of a data frame for indicating an MCS is urgently needed for the next-generation standard.

### SUMMARY

Embodiments of this application provide an information indication method and apparatus, and a data transmission system, to reduce data transmission overheads.

According to a first aspect, an embodiment of this application provides an information indication method. The method includes:
A transmit end generates a first physical layer protocol data unit PPDU, where the first PPDU includes a modulation and coding scheme MCS field,
the MCS field is used to indicate an MCS of a first space-time stream group and a difference MCS of another space-time stream group, and the difference MCS of the another space-time stream group is used to determine an MCS of the another space-time stream group.

In a first example, the MCS field includes an MCS subfield and at least one difference MCS subfield, the MCS subfield is used to indicate the MCS of the first space-time stream group, and each difference MCS subfield is used to indicate a difference MCS of one other space-time stream group.

The at least one difference MCS subfield is in a one-to-one correspondence with the MCS of the another space-time stream group. Assuming that a quantity of space-time stream groups is M, where M>1, the at least one difference MCS subfield includes a first difference MCS subfield, a second difference MCS subfield, a third difference MCS subfield, ..., and an (M-1)^{th} difference MCS subfield that are in a one-to-one correspondence with the MCS of the another space-time stream group.

A difference MCS of any other space-time stream group is used to indicate a difference between the any other space-time stream group and the first space-time stream group at a constellation mapping magnitude order.

Alternatively, a difference MCS of any other space-time stream group is used to indicate a difference between the any other space-time stream group and a previous space-time stream group of the any other space-time stream group at a constellation mapping magnitude order.

In the first example, the MCS subfield is used to indicate the MCS of the first space-time stream group, and the difference MCS subfield is used to indicate the difference MCS of the another space-time stream group. Because a quantity of bits of the difference MCS subfield is relatively small, transmission overheads of the first PPDU are reduced, thereby achieving a relatively high throughput.

In a second example, the MCS field includes an MCS subfield and a difference MCS index subfield, the MCS subfield is used to indicate the MCS of the first space-time stream group, and the difference MCS index subfield is used to indicate the difference MCS of the another space-time stream group. For example, assuming that the first PPDU includes four space-time stream groups, the MCS subfield is used to indicate the MCS of the first space-time stream group, and the difference MCS index subfield is used to indicate difference MCSs of other three space-time stream groups.

In the second example, the MCS subfield is used to indicate the MCS of the first space-time stream group, and the difference MCS index subfield is used to indicate the difference MCS of the another space-time stream group. Therefore, only two subfields are needed to indicate each space-time stream in the first PPDU, thereby reducing transmission overheads of the first PPDU and achieving a relatively high throughput.

In a third example, the MCS field includes a difference MCS index subfield, and the difference MCS index subfield is used to indicate the MCS of the first space-time stream group and the difference MCS of the another space-time stream group.

In the third example, the difference MCS index subfield is used to indicate the MCS of the first space-time stream group and the difference MCS of the another space-time stream group. Therefore, a value of only one subfield is needed to indicate each space-time stream in the first PPDU, thereby reducing transmission overheads of the first PPDU and achieving a relatively high throughput.

The transmit end may group to-be-transmitted space-time streams based on a grouping status to obtain space-time stream groups in the first PPDU. Correspondingly, a receive end needs to obtain the grouping status, so that the receive end determines a grouping status of the space-time stream groups in the first PPDU based on the grouping status when receiving the first PPDU. In this embodiment of this application, the transmit end and the receive end may obtain the grouping status in one of the following example manners.

In a first example manner, the transmit end and the receive end agree on the grouping status by using a second PPDU. Before the first physical layer protocol data unit PPDU is generated, the method further includes:
The transmit end generates the second PPDU, where the second PPDU includes a grouping field, and the grouping field is used to indicate the grouping status of the space-time stream group.

For example, a value of the grouping field in the second PPDU includes a quantity of space-time stream groups and a quantity of space-time streams included in each space-time stream group. The second PPDU may be a management frame, for example, a beacon frame, an association request frame, or a reassociation request frame.

The transmit end sends the second PPDU.

For example, in a first implementation, after grouping the to-be-transmitted space-time streams, the transmit end generates the second PPDU based on the grouping status, and sends the second PPDU, to notify the receive end of the grouping status of the space-time stream group.

In a second implementation, the transmit end may receive feedback information after sending the second PPDU, where the feedback information includes a positive feedback and a negative feedback, the positive feedback is used to indicate to the receive end that grouping is allowed to be performed by using the grouping status indicated by using the grouping field in the second PPDU, and the negative feedback is used to indicate to the receive end that grouping is not allowed to be performed by using the grouping status indicated by using the grouping field in the second PPDU. When the feedback information is the positive feedback, the transmit end groups the to-be-transmitted space-time streams by using the grouping status indicated by using the grouping field. When the feedback information is the negative feedback, the transmit end regenerates a second PPDU, and sends the regenerated second PPDU. A grouping field in the regenerated second PPDU is used to indicate another grouping status. In other words, the another grouping status is different from the foregoing grouping status.

In a second example manner, the transmit end and the receive end agree on the grouping status in advance. The grouping status may be configured during networking of a data transmission system, for example, may be burned into chips of the transmit end and the receive end, to improve flexibility of indicating the grouping status.

In a third example manner, the first PPDU includes a number of space-time streams field used to indicate a quantity of space-time streams, and a one-to-one correspondence between a quantity of space-time streams and a grouping status may be preset. The number of space-time streams field is used to indicate a grouping status of a space-time stream group. In this way, when the transmit end sends the first PPDU, the grouping status of the space-time stream groups in the first PPDU is directly indicated by using the number of space-time streams field, so that transmission overheads are reduced, and efficient data transmission is implemented.

In a fourth example manner, the MCS field is further used to indicate grouping statuses of the first space-time stream group and the another space-time stream group. In this way, when sending the first PPDU, the transmit end may indicate the grouping statuses of the space-time stream groups in the first PPDU and the another space-time stream group, and does not need to group space-time streams in the first PPDU based on a grouping status that is preset or agreed on in advance, thereby improving grouping flexibility.

Optionally, the first space-time stream group and the another space-time stream group have a same code rate, and the code rate is indicated by using the MCS of the first space-time stream group. In this way, all the space-time streams in the first PPDU have a uniform code rate, and a subsequent decoding process at the receive end can be simplified.

The transmit end sends the first PPDU.

For example, the transmit end may send the first PPDU based on the 802.11 series protocols of a WLAN.

According to a second aspect, an embodiment of this application provides an information indication method. The method includes:
A receive end receives a first physical layer protocol data unit PPDU, where the first PPDU includes a modulation and coding scheme MCS field, the MCS field is used to indicate an MCS of a first space-time stream group and a difference MCS of another space-time stream group, and the difference MCS of the another space-time stream group is used to determine an MCS of the another space-time stream group.

For example, the receive end may receive the first PPDU based on the 802.11 series protocols of a WLAN.

The receive end determines the MCS of the first space-time stream group and the MCS of the another space-time stream group based on the received first PPDU.

For example, the first PPDU includes the MCS field, and the MCS field is used to indicate the MCS of the first space-time stream group and the difference MCS of the another space-time stream group. In this case, the receive end may determine the MCS of the first space-time stream group and the MCS of the another space-time stream group based on the MCS field.

In a first example, the MCS field includes an MCS subfield and at least one difference MCS subfield. The MCS subfield is used to indicate the MCS of the first space-time stream group, and each difference MCS subfield is used to indicate a difference MCS of one other space-time stream group. The receive end may obtain the MCS of the first space-time stream group based on a value of the MCS subfield, obtain the difference MCS of the another space-time stream group based on a value of the difference MCS subfield, and then determine the MCS of the another space-time stream group based on the difference MCS.

A difference MCS of any other space-time stream group is used to indicate a difference between the any other space-time stream group and the first space-time stream group at a constellation mapping magnitude order.

Alternatively, a difference MCS of any other space-time stream group is used to indicate a difference between the any other space-time stream group and a previous space-time stream group of the any other space-time stream group at a constellation mapping magnitude order.

In a second example, the MCS field includes an MCS subfield and a difference MCS index subfield. The MCS subfield is used to indicate the MCS of the first space-time stream group, and the difference MCS index subfield is used to indicate the difference MCS of the another space-time stream group. The receive end may obtain the MCS of the first space-time stream group based on a value of the MCS subfield, obtain the difference MCS of the another space-time stream group based on a value of the difference MCS index subfield, and then determine the MCS of the another space-time stream group based on the difference MCS.

In a third example, the MCS field includes a difference MCS index subfield, and the difference MCS index subfield is used to indicate the MCS of the first space-time stream group and the difference MCS of the another space-time stream group. The receive end may obtain the MCS of the first space-time stream group and the difference MCS of the other space-time stream groups based on a value of the difference MCS index subfield, and then determine the MCS of the another space-time stream group based on the difference MCS.

Optionally, before the first physical layer protocol data unit PPDU is received, the method further includes:
The receive end receives a second PPDU, where the second PPDU includes a grouping field, and the grouping field is used to indicate a grouping status of a space-time stream group.

In a first implementation, after receiving the second PPDU, the receive end determines, as a grouping status of space-time stream groups in the second PPDU, the grouping status indicated by using the grouping field in the second PPDU. In a second implementation, after receiving the second PPDU, the receive end may send feedback information to a transmit end. For example, the receive end may determine a type of the feedback information based on a current status. When the grouping status indicated by using the grouping field in the second PPDU conforms to the current status of the receive end, the receive end sends a positive feedback to the transmit end, determines, as the grouping status of the space-time stream groups in the second PPDU, the grouping status indicated by using the grouping field in the second PPDU. When the grouping status indicated by using the grouping field in the second PPDU does not conform to the current status of the receive end, the receive end sends a negative feedback to the transmit end. After sending the negative feedback, the receive end receives a regenerated second PPDU sent by the transmit end.

Optionally, the MCS field is further used to indicate grouping statuses of the first space-time stream group and the another space-time stream group.

Optionally, the first space-time stream group and the another space-time stream group have a same code rate, and the code rate is indicated by using the MCS of the first space-time stream group.

According to a third aspect, an embodiment of this application provides an information indication method. The method includes:
A transmit end generates a physical layer protocol data unit PPDU, where the PPDU includes a modulation and coding scheme MCS field, the MCS field includes an indication subfield and at least one MCS subfield, the indication subfield is used to indicate modulation schemes of a plurality of space-time streams/space-time stream groups, and each MCS subfield is used to indicate an MCS of at least one space-time stream/space-time stream group.

When a value of the indication subfield is a first value, the indication subfield is used to indicate that the modulation schemes of the plurality of space-time streams/space-time stream groups are equal modulation schemes, and the MCS subfield is used to indicate a same MCS of the plurality of space-time streams/space-time stream groups. Optionally, the first value may be 0. When a value of the indication subfield is a second value, the indication subfield is used to indicate that the modulation schemes of the plurality of space-time streams/space-time stream groups are unequal modulation schemes, and the MCS subfield is used to indicate an MCS of at least one space-time stream/space-time stream group. For example, when the first value is 0, the second value may be 1.

For example, a preamble of the PPDU includes an extremely high throughput signaling field A and an extremely high throughput signaling field B, the indication subfield may be located in the extremely high throughput signaling field A, and the at least one MCS subfield may be located in the extremely high throughput signaling field A or the extremely high throughput signaling field B.

Optionally, when the value of the indication subfield is the second value, the MCS field includes a plurality of MCS subfields, and each MCS subfield is used to indicate an MCS of one space-time stream/space-time stream group; or the MCS field includes one MCS subfield, and the MCS subfield is used to separately indicate MCSs of the plurality of space-time streams/space-time stream groups.

The transmit end sends the PPDU. For example, the transmit end may send the PPDU based on the 802.11 series protocols of a WLAN.

According to a fourth aspect, an embodiment of this application provides an information indication method. The method includes:
A receive end receives a physical layer protocol data unit PPDU, where the PPDU includes a modulation and coding scheme MCS field, the MCS field includes an indication subfield and at least one MCS subfield, the indication subfield is used to indicate modulation schemes of a plurality of space-time streams/space-time stream groups, and each MCS subfield is used to indicate an MCS of at least one space-time stream/space-time stream group.

For example, the receive end may receive the PPDU based on the 802.11 series protocols of a WLAN.

The receive end determines MCSs of the plurality of space-time streams/space-time stream groups based on the received PPDU.

The PPDU includes an MCS field, and the receive end may determine the MCSs of the plurality of space-time streams/space-time stream groups based on a value of the MCS field.

When a value of the indication subfield is a first value, the indication subfield is used to indicate that the modulation schemes of the plurality of space-time streams/space-time stream groups are equal modulation schemes, and the MCS subfield is used to indicate a same MCS of the plurality of space-time streams/space-time stream groups. The receive end may determine, based on the indication subfield, that the modulation schemes of the plurality of space-time streams/space-time stream groups are equal modulation, and determine the same MCS of the plurality of space-time streams/space-time stream groups based on the MCS subfield.

Alternatively, when a value of the indication subfield is a second value, the indication subfield is used to indicate that the modulation schemes of the plurality of space-time streams/space-time stream groups are unequal modulation schemes, and the MCS subfield is used to indicate an MCS of at least one space-time stream/space-time stream group. The receive end may determine, based on the indication subfield, that the modulation schemes of the plurality of space-time streams/space-time stream groups are unequal modulation, and determine the MCS of the at least one space-time stream/space-time stream group based on the MCS subfield.

For example, when the value of the indication subfield is the second value, the MCS field includes a plurality of MCS subfields, and each MCS subfield is used to indicate an MCS of one space-time stream/space-time stream group; or the MCS field includes one MCS subfield, and the MCS subfield is used to separately indicate MCSs of the plurality of space-time streams/space-time stream groups.

According to a fifth aspect, an embodiment of this application provides an information indication method. The method includes:
A transmit end generates a physical layer protocol data unit PPDU, where the PPDU includes a modulation and coding scheme MCS field, the MCS field includes an indication subfield, and when a value of the indication subfield is a valid value, the indication subfield is used to indicate that modulation schemes of a plurality of space-time streams/space-time stream groups are equal modulation and indicate that the plurality of space-time streams/space-time stream groups all use the MCS, or when a value of the indication subfield is a special value, the MCS field further includes at least one MCS subfield, the indication subfield is used to indicate that modulation schemes of a plurality of space-time streams/space-time stream groups are unequal modulation schemes, and each MCS subfield is used to indicate an MCS of at least one space-time stream/space-time stream group.

Because the indication subfield may be directly used to indicate that the modulation schemes of the plurality of space-time streams are equal modulation and also indicate a same MCS of the plurality of space-time streams, a quantity of bits of the MCS field can be reduced, so that transmission overheads of the PPDU are reduced, and efficient data transmission is implemented.

For example, the transmit end may send the PPDU based on the 802.11 series protocols of a WLAN.

According to a sixth aspect, an embodiment of this application provides an information indication method. The method includes:
A receive end receives a physical layer protocol data unit PPDU, where the PPDU includes a modulation and coding scheme MCS field, the MCS field includes an indication subfield, and when a value of the indication subfield is a valid value, the indication subfield is used to indicate that modulation schemes of a plurality of space-time streams/space-time stream groups are equal modulation and indicate that the plurality of space-time streams/space-time stream groups all use the MCS, or when a value of the indication subfield is a special value, the MCS field further includes at least one MCS subfield, the indication subfield is used to indicate that modulation schemes of a plurality of space-time streams/space-time stream groups are unequal modulation schemes, and each MCS subfield is used to indicate an MCS of at least one space-time stream/space-time stream group.

For example, the receive end may receive the PPDU based on the 802.11 series protocols of a WLAN.

The receive end determines MCSs of the plurality of space-time streams/space-time stream groups based on the received PPDU.

For example, in a first case, when the value of the indication subfield in the MCS field received by the receive end is the valid value, the receive end may determine, based on the value of the indication subfield, that the modulation schemes of the plurality of space-time streams/space-time stream groups are equal modulation, and determine a same MCS of the plurality of space-time streams/space-time stream groups.

In a second case, when the value of the indication subfield in the MCS field received by the receive end is the special value, and the MCS field further includes the at least one MCS subfield, the receive end may determine, based on the value of the indication subfield, that the modulation schemes of the plurality of space-time streams/space-time stream groups are unequal modulation, and determine an MCS of each space-time stream/space-time stream group based on the MCS subfield.

According to a seventh aspect, an embodiment of this application provides an information indication apparatus. The apparatus includes:
a first generation module, configured to generate a first physical layer protocol data unit PPDU, where the first PPDU includes a modulation and coding scheme MCS field,
the MCS field is used to indicate an MCS of a first space-time stream group and a difference MCS of another space-time stream group, and the difference MCS of the another space-time stream group is used to determine an MCS of the another space-time stream group; and
a first sending module, configured to send the first PPDU.

Optionally, the MCS field includes an MCS subfield and at least one difference MCS subfield, the MCS subfield is used to indicate the MCS of the first space-time stream group, and each difference MCS subfield is used to indicate a difference MCS of one other space-time stream group.

Optionally, the MCS field includes an MCS subfield and a difference MCS index subfield, the MCS subfield is used to indicate the MCS of the first space-time stream group, and the difference MCS index subfield is used to indicate the difference MCS of the another space-time stream group.

Optionally, a difference MCS of any other space-time stream group is used to indicate a difference between the any other space-time stream group and the first space-time stream group at a constellation mapping magnitude order.

Alternatively, a difference MCS of any other space-time stream group is used to indicate a difference between the any other space-time stream group and a previous space-time stream group of the any other space-time stream group at a constellation mapping magnitude order.

Optionally, the MCS field includes a difference MCS index subfield, and the difference MCS index subfield is used to indicate the MCS of the first space-time stream group and the difference MCS of the another space-time stream group.

Optionally, the apparatus further includes:
a second generation module, configured to generate a second PPDU before the first generation module generates the first physical layer protocol data unit PPDU, where the second PPDU includes a grouping field, and the grouping field is used to indicate a grouping status of a space-time stream group; and
a second sending module, configured to send the second PPDU.

Optionally, the MCS field is further used to indicate grouping statuses of the first space-time stream group and the another space-time stream group.

Optionally, the first space-time stream group and the another space-time stream group have a same code rate, and the code rate is indicated by using the MCS of the first space-time stream group.

According to an eighth aspect, an embodiment of this application provides an information indication apparatus. The apparatus includes:
a first receiving module, configured to receive a first physical layer protocol data unit PPDU, where the first PPDU includes a modulation and coding scheme MCS field, the MCS field is used to indicate an MCS of a first space-time stream group and a difference MCS of another space-time stream group, and the difference MCS of the another space-time stream group is used to determine an MCS of the another space-time stream group; and
a determining module, configured to determine the MCS of the first space-time stream group and the MCS of the another space-time stream group based on the received first PPDU.

Optionally, the MCS field includes an MCS subfield and at least one difference MCS subfield, the MCS subfield is used to indicate the MCS of the first space-time stream group, and each difference MCS subfield is used to indicate a difference MCS of one other space-time stream group.

Optionally, the MCS field includes an MCS subfield and a difference MCS index subfield, the MCS subfield is used to indicate the MCS of the first space-time stream group, and the difference MCS index subfield is used to indicate the difference MCS of the another space-time stream group.

Optionally, a difference MCS of any other space-time stream group is used to indicate a difference between the any other space-time stream group and the first space-time stream group at a constellation mapping magnitude order.

Alternatively, a difference MCS of any other space-time stream group is used to indicate a difference between the any other space-time stream group and a previous space-time stream group of the any other space-time stream group at a constellation mapping magnitude order.

Optionally, the MCS field includes a difference MCS index subfield, and the difference MCS index subfield is used to indicate the MCS of the first space-time stream group and the difference MCS of the another space-time stream group.

Optionally, the apparatus further includes:
a second receiving module, configured to receive a second PPDU before the first receiving module receives the first physical layer protocol data unit PPDU, where the second PPDU includes a grouping field, and the grouping field is used to indicate a grouping status of a space-time stream group.

Optionally, the MCS field is further used to indicate grouping statuses of the first space-time stream group and the another space-time stream group.

Optionally, the first space-time stream group and the another space-time stream group have a same code rate, and the code rate is indicated by using the MCS of the first space-time stream group.

According to a ninth aspect, an embodiment of this application provides an information indication apparatus. The apparatus includes:
a generation module, configured to generate a physical layer protocol data unit PPDU, where the PPDU includes a modulation and coding scheme MCS field, the MCS field includes an indication subfield and at least one MCS subfield, the indication subfield is used to indicate modulation schemes of a plurality of space-time streams/space-time stream groups, and each MCS subfield is used to indicate an MCS of at least one space-time stream/space-time stream group; and
a sending module, configured to send the PPDU.

Optionally, when a value of the indication subfield is a first value, the indication subfield is used to indicate that the modulation schemes of the plurality of space-time streams/space-time stream groups are equal modulation schemes, and the MCS subfield is used to indicate a same MCS of the plurality of space-time streams/space-time stream groups.

Alternatively, when a value of the indication subfield is a second value, the indication subfield is used to indicate that the modulation schemes of the plurality of space-time streams/space-time stream groups are unequal modulation schemes, and the MCS subfield is used to indicate an MCS of at least one space-time stream/space-time stream group.

Optionally, when the value of the indication subfield is the second value, the MCS field includes a plurality of MCS subfields, and each MCS subfield is used to indicate an MCS of one space-time stream/space-time stream group; or the MCS field includes one MCS subfield, and the MCS subfield is used to separately indicate MCSs of the plurality of space-time streams/space-time stream groups.

According to a tenth aspect, an embodiment of this application provides an information indication apparatus. The apparatus includes:
a receiving module, configured to receive a physical layer protocol data unit PPDU, where the PPDU includes a modulation and coding scheme MCS field, the MCS field includes an indication subfield and at least one MCS subfield, the indication subfield is used to indicate modulation schemes of a plurality of space-time streams/space-time stream groups, and each MCS subfield is used to indicate an MCS of at least one space-time stream/space-time stream group; and
a determining module, configured to determine MCSs of the plurality of space-time streams/space-time stream groups based on the received PPDU.

Optionally, when a value of the indication subfield is a first value, the indication subfield is used to indicate that the modulation schemes of the plurality of space-time streams/space-time stream groups are equal modulation schemes, and the MCS subfield is used to indicate a same MCS of the plurality of space-time streams/space-time stream groups.

Alternatively, when a value of the indication subfield is a second value, the indication subfield is used to indicate that the modulation schemes of the plurality of space-time streams/space-time stream groups are unequal modulation schemes, and the MCS subfield is used to indicate an MCS of at least one space-time stream/space-time stream group.

Optionally, when the value of the indication subfield is the second value, the MCS field includes a plurality of MCS subfields, and each MCS subfield is used to indicate an MCS of one space-time stream/space-time stream group; or the MCS field includes one MCS subfield, and the MCS subfield is used to separately indicate MCSs of the plurality of space-time streams/space-time stream groups.

According to an eleventh aspect, an embodiment of this application provides an information indication apparatus. The apparatus includes:
a generation module, configured to generate a physical layer protocol data unit PPDU, where the PPDU includes a modulation and coding scheme MCS field, the MCS field includes an indication subfield, and when a value of the indication subfield is a valid value, the indication subfield is used to indicate that modulation schemes of a plurality of space-time streams/space-time stream groups are equal modulation and indicate that the plurality of space-time streams/space-time stream groups all use the MCS, or when a value of the indication subfield is a special value, the MCS field further includes at least one MCS subfield, the indication subfield is used to indicate that modulation schemes of a plurality of space-time streams/space-time stream groups are unequal modulation schemes, and each MCS subfield is used to indicate an MCS of at least one space-time stream/space-time stream group; and
a sending module, configured to send the PPDU.

According to a twelfth aspect, an embodiment of this application provides an information indication apparatus. The apparatus includes:
a receiving module, configured to receive a physical layer protocol data unit PPDU, where the PPDU includes a modulation and coding scheme MCS field, the MCS field includes an indication subfield, and when a value of the indication subfield is a valid value, the indication subfield is used to indicate that modulation schemes of a plurality of space-time streams/space-time stream groups are equal modulation and indicate that the plurality of space-time streams/space-time stream groups all use the MCS, or when a value of the indication subfield is a special value, the MCS field further includes at least one MCS subfield, the indication subfield is used to indicate that modulation schemes of a plurality of space-time streams/space-time stream groups are unequal modulation schemes, and each MCS subfield is used to indicate an MCS of at least one space-time stream/space-time stream group; and
a determining module, configured to determine MCSs of the plurality of space-time streams/space-time stream groups based on the received PPDU.

According to a thirteenth aspect, an embodiment of this application provides an information indication apparatus, including a processor and a transceiver that is internally connected to and communicates with the processor, where the processor is configured to generate a first physical layer protocol data unit PPDU, where the first PPDU includes a modulation and coding scheme MCS field, the MCS field is used to indicate an MCS of a first space-time stream group and a difference MCS of another space-time stream group, and the difference MCS of the another space-time stream group is used to determine an MCS of the another space-time stream group; and the transceiver is configured to send the first PPDU.

Optionally, the processor is further configured to generate a second PPDU, and the transceiver is further configured to send the second PPDU, where the second PPDU includes a grouping field, and the grouping field is used to indicate a grouping status of a space-time stream group.

The information indication apparatus provided in the thirteenth aspect is configured to perform any one of the first aspect or the possible implementations of the first aspect. For specific details, refer to any one of the first aspect or the possible implementations of the first aspect. Details are not described herein again.

According to a fourteenth aspect, an embodiment of this application provides an information indication apparatus, including a processor and a transceiver that is internally connected to and communicates with the processor, where the transceiver is configured to receive a first physical layer protocol data unit PPDU, where the first PPDU includes a modulation and coding scheme MCS field, the MCS field is used to indicate an MCS of a first space-time stream group and a difference MCS of another space-time stream group, and the difference MCS of the another space-time stream group is used to determine an MCS of the another space-time stream group; and the processor is configured to determine the MCS of the first space-time stream group and the MCS of the another space-time stream group based on the first PPDU.

Optionally, the transceiver is further configured to receive a second PPDU, where the second PPDU includes a grouping field, and the grouping field is used to indicate a grouping status of a space-time stream group.

The information indication apparatus provided in the fourteenth aspect is configured to perform any one of the second aspect or the possible implementations of the second aspect. For specific details, refer to any one of the second aspect or the possible implementations of the second aspect. Details are not described herein again.

According to a fifteenth aspect, an embodiment of this application provides an information indication apparatus, including a processor and a transceiver that is internally connected to and communicates with the processor, where the processor is configured to generate a physical layer protocol data unit PPDU, where the PPDU includes a modulation and coding scheme MCS field, the MCS field includes an indication subfield and at least one MCS subfield, the indication subfield is used to indicate modulation schemes of a plurality of space-time streams/space-time stream groups, and each MCS subfield is used to indicate an MCS of at least one space-time stream/space-time stream group; and the transceiver is configured to send the PPDU.

The information indication apparatus provided in the fifteenth aspect is configured to perform any one of the third aspect or the possible implementations of the third aspect. For specific details, refer to any one of the third aspect or the possible implementations of the third aspect. Details are not described herein again.

According to a sixteenth aspect, an embodiment of this application provides an information indication apparatus, including a processor and a transceiver that is internally connected to and communicates with the processor, where the transceiver is configured to receive a physical layer protocol data unit PPDU, where the PPDU includes a modulation and coding scheme MCS field, the MCS field includes an indication subfield and at least one MCS subfield, the indication subfield is used to indicate modulation schemes of a plurality of space-time streams/space-time stream groups, and each MCS subfield is used to indicate an MCS of at least one space-time stream/space-time stream group; and the processor is configured to determine MCSs of the plurality of space-time streams/space-time stream groups based on the received PPDU.

The information indication apparatus provided in the sixteenth aspect is configured to perform any one of the fourth aspect or the possible implementations of the fourth aspect. For specific details, refer to any one of the fourth aspect or the possible implementations of the fourth aspect. Details are not described herein again.

According to a seventeenth aspect, an embodiment of this application provides an information indication apparatus, including a processor and a transceiver that is internally connected to and communicates with the processor, where the processor is configured to generate a physical layer protocol data unit PPDU, where the PPDU includes a modulation and coding scheme MCS field, the MCS field includes an indication subfield, and when a value of the indication subfield is a valid value, the indication subfield is used to indicate that modulation schemes of a plurality of space-time streams/space-time stream groups are equal modulation and indicate that the plurality of space-time streams/space-time stream groups all use the MCS, or when a value of the indication subfield is a special value, the MCS field further includes at least one MCS subfield, the indication subfield is used to indicate that modulation schemes of a plurality of space-time streams/space-time stream groups are unequal modulation schemes, and each MCS subfield is used to indicate an MCS of at least one space-time stream/space-time stream group; and the transceiver is configured to send the PPDU.

The information indication apparatus provided in the seventeenth aspect is configured to perform any one of the fifth aspect or the possible implementations of the fifth aspect. For specific details, refer to any one of the fifth aspect or the possible implementations of the fifth aspect. Details are not described herein again.

According to an eighteenth aspect, an embodiment of this application provides an information indication apparatus, including a processor and a transceiver that is internally connected to and communicates with the processor, where the transceiver is configured to receive a physical layer protocol data unit PPDU, where the PPDU includes a modulation and coding scheme MCS field, the MCS field includes an indication subfield, and when a value of the indication subfield is a valid value, the indication subfield is used to indicate that modulation schemes of a plurality of space-time streams/space-time stream groups are equal modulation and indicate that the plurality of space-time streams/space-time stream groups all use the MCS, or when a value of the indication subfield is a special value, the MCS field further includes at least one MCS subfield, the indication subfield is used to indicate that modulation schemes of a plurality of space-time streams/space-time stream groups are unequal modulation schemes, and each MCS subfield is used to indicate an MCS of at least one space-time stream/space-time stream group; and the processor is configured to determine MCSs of the plurality of space-time streams/space-time stream groups based on the received PPDU.

The information indication apparatus provided in the eighteenth aspect is configured to perform any one of the sixth aspect or the possible implementations of the sixth aspect. For specific details, refer to any one of the sixth aspect or the possible implementations of the sixth aspect. Details are not described herein again.

According to a nineteenth aspect, an embodiment of this application provides an information indication apparatus, including a processing circuit and an output interface that is internally connected to and communicates with the processing circuit, where the processing circuit is configured to generate a first physical layer protocol data unit PPDU, where the first PPDU includes a modulation and coding scheme MCS field, the MCS field is used to indicate an MCS of a first space-time stream group and a difference MCS of another space-time stream group, and the difference MCS of the another space-time stream group is used to determine an MCS of the another space-time stream group; and the output interface is configured to send the first PPDU.

Optionally, the processing circuit is further configured to generate a second PPDU, and the output interface is further configured to send the second PPDU, where the second PPDU includes a grouping field, and the grouping field is used to indicate a grouping status of a space-time stream group.

The information indication apparatus provided in the nineteenth aspect is configured to perform any one of the first aspect or the possible implementations of the first aspect. For specific details, refer to any one of the first aspect or the possible implementations of the first aspect. Details are not described herein again.

According to a twentieth aspect, an embodiment of this application provides an information indication apparatus, including a processing circuit and an input interface that is internally connected to and communicates with the processing circuit, where the input interface is configured to receive a first physical layer protocol data unit PPDU, where the first PPDU includes a modulation and coding scheme MCS field, the MCS field is used to indicate an MCS of a first space-time stream group and a difference MCS of another space-time stream group, and the difference MCS of the another space-time stream group is used to determine an MCS of the another space-time stream group; and the processing circuit is configured to determine the MCS of the first space-time stream group and the MCS of the another space-time stream group based on the first PPDU.

Optionally, the input interface is further configured to receive a second PPDU, where the second PPDU includes a grouping field, and the grouping field is used to indicate a grouping status of a space-time stream group.

The information indication apparatus provided in the twentieth aspect is configured to perform any one of the second aspect or the possible implementations of the second aspect. For specific details, refer to any one of the second aspect or the possible implementations of the second aspect. Details are not described herein again.

According to a twenty-first aspect, an embodiment of this application provides an information indication apparatus, including a processing circuit and an output interface that is internally connected to and communicates with the processing circuit, where the processing circuit is configured to generate a physical layer protocol data unit PPDU, the PPDU includes a modulation and coding scheme MCS field, the MCS field includes an indication subfield and at least one MCS subfield, the indication subfield is used to indicate modulation schemes of a plurality of space-time streams/space-time stream groups, and each MCS subfield is used to indicate an MCS of at least one space-time stream/space-time stream group; and the output interface is configured to send the PPDU.

The information indication apparatus provided in the twenty-first aspect is configured to perform any one of the third aspect or the possible implementations of the third aspect. For specific details, refer to any one of the third aspect or the possible implementations of the third aspect. Details are not described herein again.

According to a twenty-second aspect, an embodiment of this application provides an information indication apparatus, including a processing circuit and an input interface that is internally connected to and communicates with the processing circuit, where the input interface is configured to receive a physical layer protocol data unit PPDU, where the PPDU includes a modulation and coding scheme MCS field, the MCS field includes an indication subfield and at least one MCS subfield, the indication subfield is used to indicate modulation schemes of a plurality of space-time streams/space-time stream groups, and each MCS subfield is used to indicate an MCS of at least one space-time stream/space-time stream group; and the processing circuit is configured to determine MCSs of the plurality of space-time streams/space-time stream groups based on the received PPDU.

The information indication apparatus provided in the twenty-second aspect is configured to perform any one of the fourth aspect or the possible implementations of the fourth aspect. For specific details, refer to any one of the fourth aspect or the possible implementations of the fourth aspect. Details are not described herein again.

According to a twenty-third aspect, an embodiment of this application provides an information indication apparatus, including a processing circuit and an output interface that is internally connected to and communicates with the processing circuit, where the processing circuit is configured to generate a physical layer protocol data unit PPDU, where the PPDU includes a modulation and coding scheme MCS field, the MCS field includes an indication subfield, and when a value of the indication subfield is a valid value, the indication subfield is used to indicate that modulation schemes of a plurality of space-time streams/space-time stream groups are equal modulation and indicate that the plurality of space-time streams/space-time stream groups all use the MCS, or when a value of the indication subfield is a special value, the MCS field further includes at least one MCS subfield, the indication subfield is used to indicate that modulation schemes of a plurality of space-time streams/space-time stream groups are unequal modulation schemes, and each MCS subfield is used to indicate an MCS of at least one space-time stream/space-time stream group; and the output interface is configured to send the PPDU.

The information indication apparatus provided in the twenty-third aspect is configured to perform any one of the fifth aspect or the possible implementations of the fifth aspect. For specific details, refer to any one of the fifth aspect or the possible implementations of the fifth aspect. Details are not described herein again.

According to a twenty-fourth aspect, an embodiment of this application provides an information indication apparatus, including a processing circuit and an input interface that is internally connected to and communicates with the processing circuit, where the input interface is configured to receive a physical layer protocol data unit PPDU, where the PPDU includes a modulation and coding scheme MCS field, the MCS field includes an indication subfield, and when a value of the indication subfield is a valid value, the indication subfield is used to indicate that modulation schemes of a plurality of space-time streams/space-time stream groups are equal modulation and indicate that the plurality of space-time streams/space-time stream groups all use the MCS, or when a value of the indication subfield is a special value, the MCS field further includes at least one MCS subfield, the indication subfield is used to indicate that modulation schemes of a plurality of space-time streams/space-time stream groups are unequal modulation schemes, and each MCS subfield is used to indicate an MCS of at least one space-time stream/space-time stream group; and the processing circuit is configured to determine MCSs of the plurality of space-time streams/space-time stream groups based on the received PPDU.

The information indication apparatus provided in the twenty-fourth aspect is configured to perform any one of the sixth aspect or the possible implementations of the sixth aspect. For specific details, refer to any one of the sixth aspect or the possible implementations of the sixth aspect. Details are not described herein again.

According to a twenty-fifth aspect, an embodiment of this application provides a computer-readable storage medium, configured to store a computer program, where the computer program includes instructions used to perform any one of the first aspect or the possible implementations of the first aspect.

According to a twenty-sixth aspect, an embodiment of this application provides a computer-readable storage medium, configured to store a computer program, where the computer program includes instructions used to perform any one of the second aspect or the possible implementations of the second aspect.

According to a twenty-seventh aspect, an embodiment of this application provides a computer-readable storage medium, configured to store a computer program, where the computer program includes instructions used to perform any one of the third aspect or the possible implementations of the third aspect.

According to a twenty-eighth aspect, an embodiment of this application provides a computer-readable storage medium, configured to store a computer program, where the computer program includes instructions used to perform any one of the fourth aspect or the possible implementations of the fourth aspect.

According to a twenty-ninth aspect, an embodiment of this application provides a computer-readable storage medium, configured to store a computer program, where the computer program includes instructions used to perform any one of the fifth aspect or the possible implementations of the fifth aspect.

According to a thirtieth aspect, an embodiment of this application provides a computer-readable storage medium, configured to store a computer program, where the computer program includes instructions used to perform any one of the sixth aspect or the possible implementations of the sixth aspect.

According to a thirty-first aspect, an embodiment of this application provides a computer program, where the computer program includes instructions used to perform any one of the first aspect or the possible implementations of the first aspect.

According to a thirty-second aspect, an embodiment of this application provides a computer program, where the computer program includes instructions used to perform any one of the second aspect or the possible implementations of the second aspect.

According to a thirty-third aspect, an embodiment of this application provides a computer program, where the computer program includes instructions used to perform any one of the third aspect or the possible implementations of the third aspect.

According to a thirty-fourth aspect, an embodiment of this application provides a computer program, where the computer program includes instructions used to perform any one of the fourth aspect or the possible implementations of the fourth aspect.

According to a thirty-fifth aspect, an embodiment of this application provides a computer program, where the computer program includes instructions used to perform any one of the fifth aspect or the possible implementations of the fifth aspect.

According to a thirty-sixth aspect, an embodiment of this application provides a computer program, where the computer program includes instructions used to perform any one of the sixth aspect or the possible implementations of the sixth aspect.

According to a thirty-seventh aspect, an embodiment of this application provides a data transmission system, including a sending device and a receiving device. The sending device includes the information indication apparatus provided in the seventh aspect, the thirteenth aspect, or the nineteenth aspect, and the receiving device includes the information indication apparatus provided in the eighth aspect, the fourteenth aspect, or the twentieth aspect.

According to a thirty-eighth aspect, an embodiment of this application provides a data transmission system, including a sending device and a receiving device. The sending device includes the information indication apparatus provided in the ninth aspect, the fifteenth aspect, or the twenty-first aspect, and the receiving device includes the information indication apparatus provided in the tenth aspect, the sixteenth aspect, or the twenty-second aspect.

According to a thirty-ninth aspect, an embodiment of this application provides a data transmission system, including a sending device and a receiving device. The sending device includes the information indication apparatus provided in the eleventh aspect, the seventeenth aspect, or the twenty-third aspect, and the receiving device includes the information indication apparatus provided in the twelfth aspect, the eighteenth aspect, or the twenty-fourth aspect.

Beneficial effects brought by the technical solutions provided in this application may at least include the following.

In this application, the generated first PPDU includes the space-time stream group and the MCS field. The MCS field is used to indicate the MCS of the first space-time stream group and the difference MCS of the another space-time stream group. The MCS field is used to indicate the MCS of the space-time stream group, an MCS of each space-time stream does not need to be indicated, the MCS field is used to indicate the difference MCS of the another space-time stream group, and a quantity of bits of the difference MCS is relatively small. Therefore, transmission overheads of the PPDU are reduced, so that on the premise that the transmitted PPDU includes a relatively large quantity of space-time streams and the MCS field is used to indicate a plurality of MCSs, a relatively high throughput can be achieved, thereby providing a structure of a data frame for indicating an MCS for a next-generation standard.

### BRIEF DESCRIPTION OF DRAWINGS

FIG. 1 is a schematic structural diagram of a data transmission system according to an embodiment of this application;
FIG. 2 is a schematic structural diagram of another data transmission system according to an embodiment of this application;
FIG. 3 is a flowchart of an information indication method according to an embodiment of this application;
FIG. 4 is a schematic structural diagram of a preamble of a first PPDU according to an embodiment of this application;
FIG. 5 is a schematic structural diagram of an MCS field according to an embodiment of this application;
FIG. 6 is a schematic structural diagram of another MCS field according to an embodiment of this application;
FIG. 7 is a schematic structural diagram of still another MCS field according to an embodiment of this application;
FIG. 8 is a flowchart of a grouping status obtaining method according to an embodiment of this application;
FIG. 9 is a schematic structural diagram of a grouping field according to an embodiment of this application;
FIG. 10 is a flowchart of another information indication method according to an embodiment of this application;
FIG. 11 is a schematic structural diagram of a PPDU according to an embodiment of this application;
FIG. 12 is a schematic structural diagram of another PPDU according to an embodiment of this application;
FIG. 13 is a schematic structural diagram of still another PPDU according to an embodiment of this application;
FIG. 14 is a schematic structural diagram of yet another PPDU according to an embodiment of this application;
FIG. 15 is a flowchart of still another information indication method according to an embodiment of this application;
FIG. 16 is a schematic structural diagram of yet another PPDU according to an embodiment of this application;
FIG. 17 is a schematic structural diagram of yet another PPDU according to an embodiment of this application;
FIG. 18 is a block diagram of an information indication apparatus according to an embodiment of this application;
FIG. 19 is a block diagram of another information indication apparatus according to an embodiment of this application;
FIG. 20 is a block diagram of still another information indication apparatus according to an embodiment of this application;
FIG. 21 is a block diagram of yet another information indication apparatus according to an embodiment of this application;
FIG. 22 is a block diagram of yet another information indication apparatus according to an embodiment of this application;
FIG. 23 is a block diagram of yet another information indication apparatus according to an embodiment of this application;
FIG. 24 is a block diagram of yet another information indication apparatus according to an embodiment of this application;
FIG. 25 is a block diagram of yet another information indication apparatus according to an embodiment of this application; and
FIG. 26 is a schematic structural diagram of an information indication apparatus according to an embodiment of this application.

### DESCRIPTION OF EMBODIMENTS

To make the objectives, technical solutions, and advantages of this application clearer, the following further describes implementations of this application in detail with reference to the accompanying drawings.

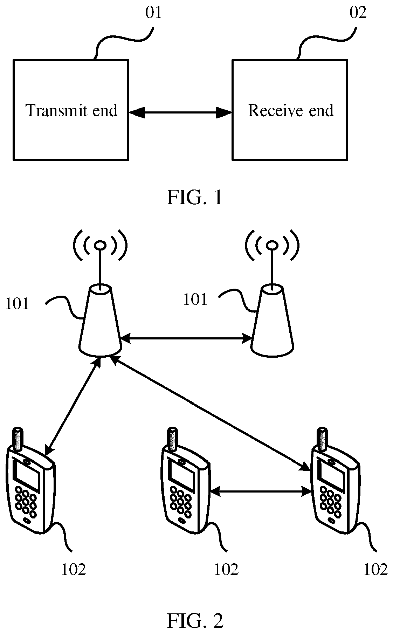

An embodiment of this application provides a data transmission system. As shown in FIG. 1, the data transmission system includes a transmit end 01 and a receive end 02, and the transmit end 01 and the receive end 02 may communicate with each other through a wireless network. Optionally, the data transmission system may be a WLAN. The WLAN may include a plurality of basic service sets (Basic Service Set, BSS). Nodes of the BSS include an access point (Access Point, AP) and a non-access-point station (non-access-point station, Non-AP STA), which is also referred to as a station (Station, STA). Each BSS may include one AP and a plurality of STAs associated with the AP. FIG. 2 is a schematic structural diagram of another data transmission system according to an embodiment of this application. The data transmission system includes at least one AP and at least one STA. It is assumed in FIG. 2 that the data transmission system includes two APs 101 and three STAs 102. However, quantities and types of devices in the data transmission system are not limited. In the data transmission system, communication may be performed between an AP and a STA, between APs, and between STAs through a wireless network. In this case, the data transmission system may include at least one of the following communication scenarios: The AP is a transmit end, and the STA is a receive end. The STA is a transmit end, and the AP is a receive end. One AP is a transmit end, and the other AP is a receive end. One STA is a transmit end, and the other STA is a receive end. This is not limited in this embodiment of this application.

The AP may also be referred to as a wireless access point, a hotspot, or the like. The AP is an access point used by a mobile user to access a wired network, and is mainly deployed in a home, inside a building, and inside a campus, with a typical coverage radius of tens of meters to hundreds of meters. Certainly, the AP may alternatively be deployed outdoors. The AP is equivalent to a bridge connecting a wired network and a wireless network. Main functions of the AP are to connect STAs together and then connect the wireless network to the wired network. Optionally, the AP may be a terminal device or a network device with a wireless fidelity (wireless fidelity, Wi-Fi) chip. For example, the AP may be a communications server, a router, a switch, or a bridge.

Optionally, the STA may be a wireless communications chip, a wireless sensor, or a wireless communications terminal. For example, the STA may be any one of the following devices that support a Wi-Fi communication function: a mobile phone, a tablet computer, a set-top box, a smart television, a smart wearable device, an in-vehicle communications device, a computer, or the like.

In the 802.11 series protocols of the WLAN, data is transmitted between the AP and the SAT by using a physical layer protocol data unit (PHY Protocol Data Unit, PPDU). The PPDU includes a space-time stream and an MCS field, and the MCS field is used to indicate an MCS of the space-time stream. A manner in which space-time streams use different MCSs is referred to as unbalanced modulation (Unequal modulation, UEQM), and a manner in which space-time streams use a same MCS is referred to as equalized modulation.

A next-generation standard of the current 802.11 series protocol is under discussion. Compared with a current standard, the next-generation standard has a higher throughput, supports more space-time streams simultaneously transmitted by a transmit end, and supports more MCS types. An MCS field in a PPDU in the current standard is not applicable to the next-generation standard. Therefore, a structure of a data frame for indicating an MCS is urgently needed for the next-generation standard.

An embodiment of this application provides an information indication method, and the method is applicable to a structure of a data frame in a next-generation standard. In the method, a structure of an MCS field in a PPDU is changed to reduce a quantity of bits (bit) of the MCS field, thereby reducing transmission overheads of the PPDU. The information indication method may be applied to a data transmission system. For example, the method may be applied to the AP and the STA in the data transmission system shown in FIG. 2. In this embodiment of this application, for MCS fields of different PPDUs, structures of the MCS fields may be different, and meanings represented by values indicated by using the MCS fields may also be different. Therefore, in this embodiment of this application, the following three PPDU structures are used as examples to describe the information indication method.

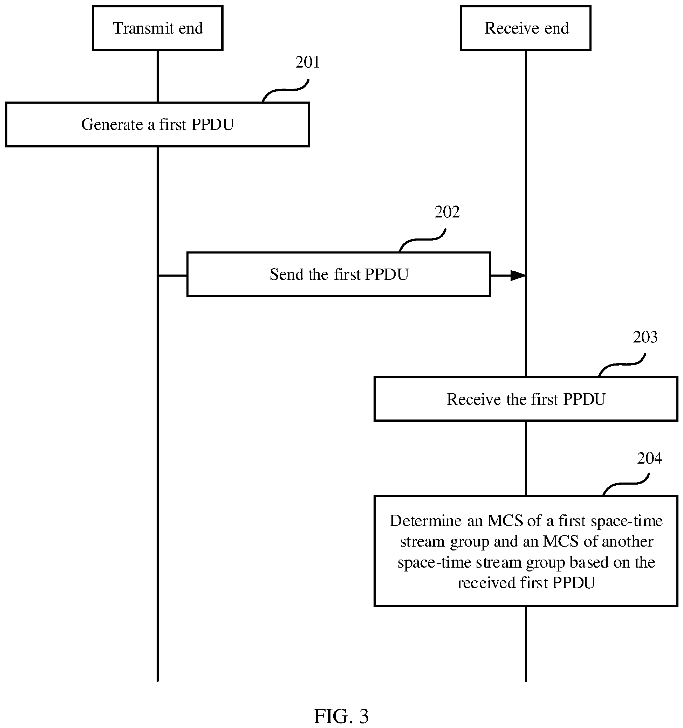

In a first implementation, the PPDU includes space-time stream groups and an MCS field, and the MCS field is used to indicate an MCS of a first space-time stream group and a difference MCS of another space-time stream group. FIG. 3 is a flowchart of an information indication method according to an embodiment of this application. The method includes the following steps.

Step 201: A transmit end generates a first PPDU.

The first PPDU (which is also referred to as a data frame) includes an MCS field. The MCS field is used to indicate an MCS of a first space-time stream group and a difference MCS of another space-time stream group. The difference MCS of the another space-time stream group is used to determine an MCS of the another space-time stream group.

For example, the transmit end may group to-be-transmitted space-time streams based on a grouping status, to obtain space-time stream groups in the first PPDU.

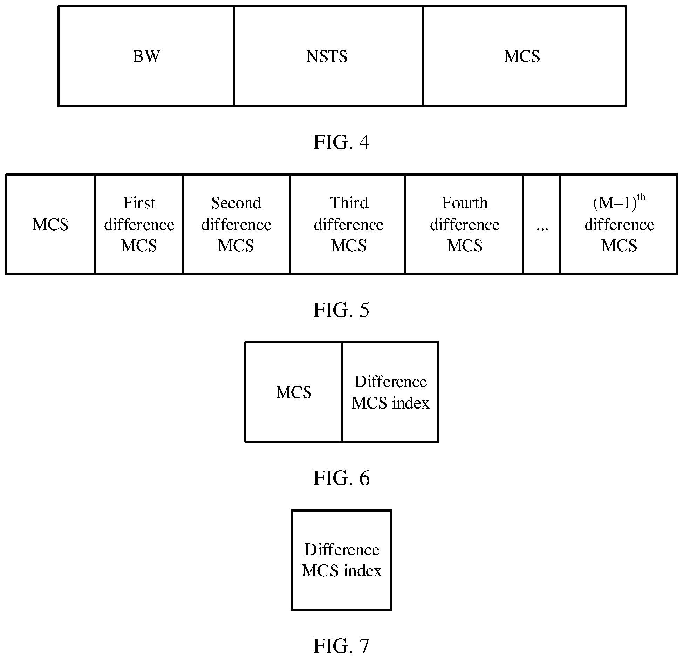

The first PPDU includes a preamble, and the MCS field may be located in the preamble. For example, FIG. 4 is a schematic structural diagram of a preamble of a first PPDU according to an embodiment of this application. The preamble includes a band width (Band Width, BW) field, a number of space-time streams (number of space-time streams, NSTS) field, and an MCS field. The BW field is used to indicate a bandwidth of the first PPDU, the NSTS field is used to indicate a quantity of space-time streams in the first PPDU, and the MCS field is used to indicate an MCS of a first space-time stream group and a difference MCS of another space-time stream group. It should be noted that in this embodiment of this application, an example in which the preamble includes the BW field, the NSTS field, and the MCS field is used for description. In actual application, the preamble may further include another field. For example, the preamble may further include a data packet format field, a data packet extension (Packet Extension, PE) indication field, or the like. A structure of the preamble is not limited in this embodiment of this application. The MCS field may be used to indicate the MCS of the first space-time stream group and the difference MCS of the another space-time stream group in a plurality of manners. In this embodiment of this application, the following several examples are used to describe a structure of the MCS field.

In a first example, an MCS subfield and a difference MCS subfield in the MCS field are used to respectively indicate the MCS of the first space-time stream group and the difference MCS of the another space-time stream group. FIG. 5 is a schematic structural diagram of an MCS field according to an embodiment of this application. The MCS field includes an MCS subfield and at least one difference MCS subfield. The at least one difference MCS subfield is in a one-to-one correspondence with the MCS of the another space-time stream group. Assuming that a quantity of space-time stream groups is M, where M>1, the at least one difference MCS subfield includes a first difference MCS subfield, a second difference MCS subfield, a third difference MCS subfield, ..., and an (M-1)^{th} difference MCS subfield that are in a one-to-one correspondence with the MCS of the another space-time stream group. For example, in the following Table 1, Table 1 shows a correspondence between an MCS subfield in an MCS field and indicated content, and a correspondence between a difference MCS subfield and indicated content. Refer to Table 1. A quantity of bits of the MCS subfield is four bits, a quantity of bits of each difference MCS subfield is two bits, the MCS subfield is used to indicate the MCS of the first space-time stream group, and each difference MCS subfield is used to indicate a difference MCS of one other space-time stream group (that is, corresponding one other space-time stream group).

**Table 1**

| MCS field | Quantity of bits | Indicated content |
|---|---|---|
| MCS subfield | 4 | MCS of a first space-time stream group |
| First difference MCS subfield | 2 | Difference MCS of a second space-time stream group |
| Second difference MCS subfield | 2 | Difference MCS of a third space-time stream |
| | | group |
| Third difference MCS subfield | 2 | Difference MCS of a fourth space-time stream group |
| Fourth difference MCS subfield | 2 | Difference MCS of a fifth space-time stream group |
| Fifth difference MCS subfield | 2 | Difference MCS of a sixth space-time stream group |
| ... | ... | ... |
| (M-1)^{th} difference MCS subfield | 2 | Difference MCS of an M^{th} space-time stream group |

For example, in the following Table 2, Table 2 shows a one-to-one correspondence between a value of the MCS subfield and the MCS of the first space-time stream group. Refer to Table 2. A value range of the MCS subfield is 0 to 14. R is used to indicate a code rate of the first space-time stream group. The MCS subfield is used to indicate the MCS of the first space-time stream group. For example, when the value of the MCS subfield is 5, it indicates that the MCS of the first space-time stream group is: 64-QAM, where R=2/3.

**Table 2**

| MCS subfield | MCS of a first space-time stream group |
|---|---|
| 0 | Binary phase shift keying BPSK, where R=1/2 |
| 1 | Quadrature phase shift keying QPSK, where R=1/2 |
| 2 | QPSK, where R=3/4 |
| 3 | 16-QAM (quadrature amplitude modulation), where R=1/2 |
| 4 | 16-QAM (quadrature amplitude modulation), where R=3/4 |
| 5 | 64-QAM, where R=2/3 |
| 6 | 64-QAM, where R=3/4 |
| 7 | 64-QAM, where R=5/6 |
| 8 | 256-QAM, where R=3/4 |
| 9 | 256-QAM, where R=5/6 |
| 10 | 1024-QAM, where R=3/4 |
| 11 | 1024-QAM, where R=5/6 |
| 12 | 4096-QAM, where R=3/4 |
| 13 | 4096-QAM, where R=5/6 |
| 14 | 4096-QAM, where R=7/8 |
| 15 | Reserved |

In an example, a value of a difference MCS subfield of any other space-time stream group is used to indicate a difference between the any other space-time stream group and the first space-time stream group at a constellation mapping magnitude order. Constellation mapping refers to a modulation scheme in which a to-be-transmitted bit sequence is mapped to a symbol sequence suitable for transmission. The constellation mapping magnitude order refers to an order of a modulation scheme. A higher order of the modulation scheme indicates a larger quantity of bits in each of symbol sequences obtained by mapping the bit sequence. For example, in Table 2, Table 2 shows seven orders of constellation mapping. A result obtained after the seven orders of constellation mapping are sorted in ascending order of orders is: BPSK, QPSK, 16-QAM, 64-QAM, 256-QAM, 1024-QAM, and 4096-QAM. For the seven orders of constellation mapping, a difference between a QPSK magnitude order and a BPSK magnitude order is 1, a difference between a 16-QAM magnitude order and the BPSK magnitude order is 2, a difference between a 64-QAM magnitude order and the BPSK magnitude order is 3, and so on. The value of the difference MCS subfield of the any other space-time stream group is in a one-to-one correspondence with the difference between the any other space-time stream group and the first space-time stream group at the constellation mapping magnitude order. The correspondence may be set in a specified relationship table. The transmit end may query the specified relationship table based on the difference between the any other space-time stream group and the first space-time stream group at the constellation mapping magnitude order, and determine a value of a corresponding difference MCS subfield. A receive end may query the specified relationship table based on the value of the difference MCS subfield, and determine the difference between the any other space-time stream group and the first space-time stream group at the constellation mapping magnitude order. The specified relationship table may be agreed on in advance, or may be notified by the transmit end to the receive end by using another PPDU (for example, a management frame), or may be carried in the first PPDU. For example, when the value of the difference MCS subfield of the any other space-time stream group is P1, it indicates that the difference between the any other space-time stream group and the first space-time stream group at the constellation mapping magnitude order is Q1. P1 and Q1 may be equal or unequal and are positively correlated or negatively correlated. This is not limited in this embodiment of this application provided that the other of P1 the Q1 can be found based on one of P1 the Q1. For example, it only needs to ensure that Q1 can be found through P1.

In another example, a value of a difference MCS subfield of any other space-time stream group is used to indicate a difference between the any other space-time stream group and a previous space-time stream group of the any other space-time stream group at a constellation mapping magnitude order. The value of the difference MCS subfield of the any other space-time stream group is in a one-to-one correspondence with the difference between the any other space-time stream group and the previous space-time stream group at the constellation mapping magnitude order. The correspondence may be set in a specified relationship table. The transmit end may query the specified relationship table based on the difference between the any other space-time stream group and the previous space-time stream group at the constellation mapping magnitude order, and determine a value of a corresponding difference MCS subfield. A receive end may query the specified relationship table based on the value of the difference MCS subfield, and determine the difference between the any other space-time stream group and the previous space-time stream group at the constellation mapping magnitude order. The specified relationship table may be agreed on in advance, or may be notified by the transmit end to the receive end by using another PPDU (for example, a management frame), or may be carried in the first PPDU. For example, when the value of the difference MCS subfield of the any other space-time stream group is P2, it indicates that the difference between the any other space-time stream group and the previous space-time stream group at the constellation mapping magnitude order is Q2. P2 and Q2 may be equal or unequal and are positively correlated or negatively correlated. This is not limited in this embodiment of this application provided that the other of P2 the Q2 can be found based on one of P2 the Q2.

For example, in the following Table 3, Table 3 shows a correspondence between a value of a difference MCS subfield and a difference MCS of another space-time stream group. Table 3 is described by using an example in which the value of the difference MCS subfield is used to indicate the difference between the any other space-time stream group and the first space-time stream group at the constellation mapping magnitude order. An N^{th} space-time stream group is used to indicate any other space-time stream group. A value of a difference MCS subfield of the N^{th} space-time stream group is equal to a difference between the N^{th} space-time stream group and the first space-time stream group at the constellation mapping magnitude order, that is, P1=Q1. For example, when the value of the difference MCS subfield is 1, it indicates that the difference between the N^{th} space-time stream group and the first space-time stream group at the constellation mapping magnitude order is 1. In other words, the N^{th} space-time stream group and the first space-time stream group differ by one constellation mapping order.

In this embodiment of this application, the difference MCS is used to determine the MCS of the another space-time stream group. For example, it is assumed that the first PPDU includes four space-time stream groups, a value of the MCS subfield of the first PPDU is 7, a value of the first difference MCS subfield is 1, a value of the second difference MCS subfield is 2, and a value of the third difference MCS subfield is 3. In this case, it is learned by referring to Table 2 that the MCS of the first space-time stream group in the first PPDU is 64-QAM, where R=5/6. It can be learned based on the MCS of the first space-time stream group and by referring to Table 3 that an MCS of the second space-time stream group is 256-QAM, where R=5/6, an MCS of the third space-time stream group is 1024-QAM, where R=5/6, and an MCS of the fourth space-time stream group is 4096-QAM, where R=5/6.

**Table 3**

| Difference MCS subfield | MCS of an N^{th} space-time stream group |
|---|---|
| 0 | Same as an MCS of a first space-time stream group |
| 1 | If modulation of the first space-time stream group is BPSK, modulation of the N^{th} space-time stream group is QPSK; |
| | if modulation of the first space-time stream group is QPSK, modulation of the N^{th} space-time stream group is 16-QAM; |
| | if modulation of the first space-time stream group is 16-QAM, modulation of the N^{th} space-time stream group is 64-QAM; |
| | if modulation of the first space-time stream group is 64-QAM, modulation of the N^{th} space-time stream group is 256-QAM; |
| | if modulation of the first space-time stream group is 256-QAM, modulation of the N^{th} space-time stream group is 1024-QAM; or |
| | if modulation of the first space-time stream group is 1024-QAM, modulation of the N^{th} space-time stream group is 4096-QAM, where |
| | a code rate of the N^{th} space-time stream group is the same as a code rate of the first space-time stream group |
| 2 | If modulation of the first space-time stream group is BPSK, modulation of the N^{th} space-time stream group is 16-QAM; |
| | if modulation of the first space-time stream group is QPSK, modulation of the N^{th} space-time stream group is 64-QAM; |
| | if modulation of the first space-time stream group is 16-QAM, modulation of the N^{th} space-time stream group is 256-QAM; |
| | if modulation of the first space-time stream group is 64-QAM, modulation of the N^{th} space-time stream group is 1024-QAM; or |
| | if modulation of the first space-time stream group is 256-QAM, modulation of the N^{th} space-time stream group is 4096-QAM, where |
| | a code rate of the N^{th} space-time stream group is the same as a code rate of the first space-time stream group |
| 3 | If modulation of the first space-time stream group is BPSK, modulation of the N^{th} space-time stream group is 64-QAM; |
| | if modulation of the first space-time stream group is QPSK, modulation of the N^{th} space-time |
| | stream group is 256-QAM; |
| | if modulation of the first space-time stream group is 16-QAM, modulation of the N^{th} space-time stream group is 1024-QAM; or |
| | if modulation of the first space-time stream group is 64-QAM, modulation of the N^{th} space-time stream group is 4096-QAM, where |
| | a code rate of the N^{th} space-time stream group is the same as a code rate of the first space-time stream group |

In the first example, the MCS subfield is used to indicate the MCS of the first space-time stream group, and the difference MCS subfield is used to indicate the difference MCS of the another space-time stream group. Because a quantity of bits of the difference MCS subfield is relatively small, transmission overheads of the first PPDU are reduced, thereby achieving a relatively high throughput.

In a second example, an MCS subfield and a difference MCS index subfield in the MCS field are used to respectively indicate the MCS of the first space-time stream group and the difference MCS of the another space-time stream group. FIG. 6 is a schematic structural diagram of another MCS field according to an embodiment of this application. The MCS field includes an MCS subfield and a difference MCS index subfield. For example, in the following Table 4, Table 4 shows a correspondence between an MCS subfield and indicated content, and a correspondence between a difference MCS index subfield and indicated content. Refer to Table 4. The MCS subfield is used to indicate the MCS of the first space-time stream group, and the difference MCS index subfield is used to indicate the difference MCS of the another space-time stream group.

**Table 4**

| MCS field | Quantity of bits | Indicated content |
|---|---|---|
| MCS subfield | 4 | MCS of a first space-time stream group |
| Difference MCS index subfield | 4 | Difference MCS of another space-time stream group |

For a one-to-one correspondence between a value of the MCS subfield and the MCS of the first space-time stream group, refer to the foregoing Table 2. Details are not described herein again in this embodiment of this application. For example, assuming that the first PPDU includes four space-time stream groups, the difference MCS index subfield is used to indicate difference MCSs of three other space-time stream groups. Refer to the following Table 5. Table 5 shows a one-to-one correspondence between a value of a difference MCS index subfield and a difference MCS of another space-time stream group. A value range of the difference MCS index subfield is 0 to 13. For a value of the difference MCS, indicated by using the difference MCS index subfield, of the another space-time stream group, refer to the value of the difference MCS subfield in Table 3. For example, when the value of the difference MCS index subfield is 7, it indicates that a value of a difference MCS of the second space-time stream group is 0, indicates that a value of a difference MCS of the third space-time stream group is 0, and indicates that a value of a difference MCS of the fourth space-time stream group is 3.

For example, assuming that the first PPDU includes four space-time stream groups, the value of the MCS field in the first PPDU is 7, and the value of the difference MCS index subfield is 7, it is learned from Table 5 that the value of the difference MCS of the second space-time stream group is 0, the value of the difference MCS of the third space-time stream group is 0, and the value of the difference MCS of the fourth space-time stream group is 3. It is learned from Table 2 that the MCS of the first space-time stream group is 64-QAM, where R=5/6. In this case, it is learned from Table 3 that the modulation of the second space-time stream group is 64-QAM, where code rate R=5/6; the modulation of the third space-time stream group is 64-QAM, where code rate R=5/6; and modulation of the fourth space-time stream group is 4096-QAM, where code rate R=5/6.

**Table 5**

| Difference MCS index subfield | Difference MCS of a second space-time stream group | Difference MCS of a third space-time stream group | Difference MCS of a fourth space-time stream group |
|---|---|---|---|
| 0 | 0 | 0 | 0 |
| 1 | 0 | 0 | 1 |
| 2 | 0 | 1 | 1 |
| 3 | 1 | 1 | 1 |
| 4 | 0 | 0 | 2 |
| 5 | 0 | 2 | 2 |
| 6 | 2 | 2 | 2 |
| 7 | 0 | 0 | 3 |
| 8 | 0 | 3 | 3 |
| 9 | 3 | 3 | 3 |
| 10 | 0 | 2 | 3 |
| 11 | 0 | 1 | 3 |
| 12 | 1 | 2 | 3 |
| 13 | 0 | 1 | 2 |
| 14 | Reserved | | |
| 15 | Reserved | | |

In the second example, the MCS subfield is used to indicate the MCS of the first space-time stream group, and the difference MCS index subfield is used to indicate the difference MCS of the another space-time stream group. Therefore, only two subfields are needed to indicate each space-time stream in the first PPDU, thereby reducing transmission overheads of the first PPDU and achieving a relatively high throughput.

In a third example, a difference MCS index subfield in the MCS field is used to indicate the MCS of the first space-time stream group and the difference MCS of the another space-time stream group. FIG. 7 is a schematic structural diagram of still another MCS field according to an embodiment of this application. The MCS field includes a difference MCS index subfield, and the difference MCS index subfield is used to indicate the MCS of the first space-time stream group and the difference MCS of the another space-time stream group.

It is assumed that the first PPDU includes four space-time stream groups, and MCSs of space-time stream groups are gradually increased at a constellation mapping magnitude order from the first space-time stream group to the fourth space-time stream group. Refer to the following Table 6. Table 6 shows a one-to-one correspondence between a value of the difference index subfield and the MCS of the first space-time stream group and a one-to-one correspondence between a value of the difference index subfield and the difference MCS of the another space-time stream group. Table 6 shows only a partial one-to-one correspondence between the value of the difference index subfield and the MCS of the first space-time stream group and a partial one-to-one correspondence between the value of the difference index subfield and the difference MCS of the another space-time stream group. During actual application, a value range of the difference index subfield may be greater than the value range shown in Table 6. The value range of the difference index subfield is not limited in this embodiment of this application. For a value of the MCS, indicated by using the difference MCS index subfield, of the first space-time stream group, refer to the value of the MCS subfield in Table 2. For a value of the difference MCS, indicated by using the difference MCS index subfield, of the another space-time stream group, refer to the value of the difference MCS subfield in Table 3. For example, when the value of the difference MCS index subfield is 7, it indicates that the value of the MCS of the first space-time stream group is 0, the value of the difference MCS of the second space-time stream group is 0, the value of the difference MCS of the third space-time stream group is 0, and the value of the difference MCS of the fourth space-time stream group is 3.

For example, assuming that the first PPDU includes four space-time stream groups, and the value of the difference MCS index subfield of the first PPDU is 7, it is learned from Table 6 that the value of the MCS of the first space-time stream group is 0, the value of the difference MCS of the second space-time stream group is 0, the value of the difference MCS of the third space-time stream group is 0, and the value of the difference MCS of the fourth space-time stream group is 3. It is learned from Table 2 that the MCS of the first space-time stream group is binary phase shift keying BPSK, where R=1/2. It is learned from Table 3 that the modulation of the second space-time stream group is binary phase shift keying BPSK, where code rate R=1/2; the modulation of the third space-time stream group is binary phase shift keying BPSK, where code rate R=1/2; and the modulation of the fourth space-time stream group is 64-QAM, where code rate R=1/2.

**Table 6**

| Difference MCS index subfield | MCS of a first space-time stream group | Difference MCS of a second space-time stream group | Difference MCS of a third space-time stream group | Difference MCS of a fourth space-time stream group |
|---|---|---|---|---|
| 0 | 0 | 0 | 0 | 0 |
| 1 | 0 | 0 | 0 | 1 |
| 2 | 0 | 0 | 1 | 1 |
| 3 | 0 | 1 | 1 | 1 |
| 4 | 0 | 0 | 0 | 2 |
| 5 | 0 | 0 | 2 | 2 |
| 6 | 0 | 2 | 2 | 2 |
| 7 | 0 | 0 | 0 | 3 |
| 8 | 0 | 0 | 3 | 3 |
| 9 | 0 | 3 | 3 | 3 |
| 10 | 0 | 0 | 2 | 3 |
| 11 | 0 | 0 | 1 | 3 |
| 12 | 0 | 1 | 2 | 3 |
| 13 | 0 | 0 | 1 | 2 |
| 14 | 1 | 0 | 0 | 0 |
| 15 | 1 | 0 | 0 | 1 |
| ... | ... | ... | ... | ... |
| ... | ... | ... | ... | ... |
| ... | 14 | 0 | 0 | 0 |
| ... | Reserved | | | |

In the third example, the difference MCS index subfield is used to indicate the MCS of the first space-time stream group and the difference MCS of the another space-time stream group. Therefore, a value of only one subfield is needed to indicate each space-time stream in the first PPDU. In addition, because each difference MCS index subfield indicating the MCS of the first space-time stream group and each difference MCS index subfield indicating the difference MCS of the another space-time stream group are correlated, in some scenarios, a combination case of difference MCSs of other space-time stream groups may be determined based on the MCS of the first space-time stream group, and some impossible combination cases of the difference MCSs can be excluded. Therefore, the value range of the difference MCS index subfield is smaller, and transmission overheads of the first PPDU are further reduced, to achieve a relatively high throughput. For example, in Table 6, the MCSs of the space-time stream groups in Table 6 are gradually increased at the constellation mapping magnitude order. When the value of the MCS of the first space-time stream group is 14 (it is assumed that a constellation mapping magnitude order of the MCS indicated by 14 is a maximum magnitude order), a constellation mapping magnitude order of the MCS of the first space-time stream group reaches the maximum magnitude order. In this case, a constellation mapping magnitude order of the MCS of the another space-time stream group can only be the maximum magnitude order, and correspondingly, the value of the difference MCS can only be 0. Therefore, another combination case of the difference MCS of the another space-time stream group is excluded.

During actual application of this application, a table indicating an MCS of unequal modulation and a table indicating an MCS of equal modulation may be integrated into one table. In this way, table maintenance overheads of the transmit end and the receive end can be reduced. Table 5 and Table 6 are examples of tables formed by integrating the table indicating the MCS of unequal modulation and the table indicating the MCS of equal modulation. In Table 5, when the value of the difference MCS index subfield is 0, it indicates a case of the MCS of equal modulation. When the value of the difference MCS index subfield is any one of 1 to 13, it indicates a case of the MCS of unequal modulation. In Table 6, when the value of the difference MCS index subfield is 0 or 14, or the value indicates that the value of the MCS of the first space-time stream group is 14, or the like, it indicates a case of the MCS of equal modulation. When the value of the difference MCS index subfield is any one of 1 to 13, 15, or the like, it indicates a case of the MCS of unequal modulation. In Table 6, there is another case of indicating the MCS of equal modulation or unequal modulation. Examples are not listed one by one in this embodiment of this application.

In this embodiment of this application, the code rate of the first space-time stream group may be the same as a code rate of the another space-time stream group. As described above, the MCS may include the code rate. Because the code rate of the first space-time stream group is the same as the code rate of the another space-time stream group, the code rate may be indicated by using an MCS of any space-time stream group. For example, the code rate may be indicated by using the MCS of the first space-time stream group. In this way, all the space-time streams in the first PPDU have a uniform code rate, and a subsequent decoding process at the receive end can be simplified. For example, as shown in the foregoing Table 2, assuming that the value of the MCS subfield of the first space-time stream group is 5, the MCS of the first space-time stream group is used to indicate that code rate R=2/3, and the code rate of the another space-time stream group is 2/3.

Step 202: The transmit end sends the first PPDU.

For example, the transmit end may send the first PPDU based on the 802.11 series protocols of a WLAN.

Step 203: The receive end receives the first PPDU.

For example, the receive end may receive the first PPDU based on the 802.11 series protocols of the WLAN.

Step 204: The receive end determines the MCS of the first space-time stream group and the MCS of the another space-time stream group based on the received first PPDU.

For example, it can be learned from the foregoing step 201 that the first PPDU includes the MCS field, and the MCS field is used to indicate the MCS of the first space-time stream group and the difference MCS of the another space-time stream group. In this case, the receive end may determine the MCS of the first space-time stream group and the MCS of the another space-time stream group based on the MCS field.

The MCS field has a plurality of structures. For MCSs of different structures, manners in which the receive end determines the MCS of the first space-time stream group and the MCS of the another space-time stream group based on the received first PPDU are different. In this embodiment of this application, corresponding to the foregoing several structures of the MCS field in step 201, manners in which the receive end determines the MCS of the first space-time stream group and the MCS of the another space-time stream group are described.

Corresponding to the first example in step 201, the MCS field includes the MCS subfield and the at least one difference MCS subfield. The receive end may obtain the MCS of the first space-time stream group based on the value of the MCS subfield, obtain the difference MCS of the another space-time stream group based on the value of the difference MCS subfield, and then determine the MCS of the another space-time stream group based on the difference MCS.

For the difference MCS subfield, in an example, a value of the difference MCS subfield is used to indicate a difference between any other space-time stream group and the first space-time stream group at a constellation mapping magnitude order, and a value of a difference MCS subfield of the any other space-time stream group is in a one-to-one correspondence with the difference between the any other space-time stream group and the first space-time stream group at the constellation mapping magnitude order. In this case, the receive end may obtain the difference between the any other space-time stream group and the first space-time stream group at the constellation mapping magnitude order based on the value of the difference MCS subfield.

In another example, a value of the difference MCS subfield is used to indicate a difference between any other space-time stream group and a previous space-time stream group of the any other space-time stream group at a constellation mapping magnitude order, and a value of a difference MCS subfield of the any other space-time stream group is in a one-to-one correspondence with the difference between the any other space-time stream group and the previous space-time stream group of the any other space-time stream group at the constellation mapping magnitude order. In this case, the receive end may obtain the difference between the any other space-time stream group and the previous space-time stream group at the constellation mapping magnitude order based on the value of the difference MCS subfield.

For example, the receive end may obtain the MCS of the first space-time stream group by querying Table 2 based on the value of the MCS subfield, and then obtain the MCS of the another space-time stream group by querying Table 3 based on the value of the difference MCS subfield. For example, the first PPDU received by the receive end includes four space-time stream groups, a value of the received MCS subfield is 7, a value of the first difference MCS subfield is 1, a value of the second difference MCS subfield is 2, and a value of the third difference MCS subfield is 3. The receive end obtains, by querying Table 2 based on the value 7 of the MCS subfield, that the MCS of the first space-time stream group is 64-QAM, where R=5/6, and obtains, by querying Table 3 based on the value 1 of the first difference MCS subfield, the value 2 of the second difference MCS subfield, and the value 3 of the third difference MCS subfield, that the MCS of the second space-time stream group is 256-QAM, where R=5/6; the MCS of the third space-time stream group is 1024-QAM, where R=5/6; and the MCS of the fourth space-time stream group is 4096-QAM, where R=5/6.

Corresponding to the second example in step 201, the MCS field includes the MCS subfield and the difference MCS index subfield. The receive end may obtain the MCS of the first space-time stream group based on the value of the MCS subfield, obtain the difference MCS of the another space-time stream group based on the value of the difference MCS index subfield, and then determine the MCS of the another space-time stream group based on the difference MCS.

For example, the receive end may obtain the MCS of the first space-time stream group by querying Table 2 based on the value of the MCS subfield, obtain the value of the difference MCS of the another space-time stream group by querying Table 5 based on the value of the difference MCS index subfield, and then obtain the MCS of the another space-time stream group by querying Table 3 based on the value of the difference MCS. For example, the first PPDU received by the receive end includes four space-time stream groups, a value of the received MCS subfield is 7, and a value of the difference MCS index subfield is 7. In this case, the receive end obtains, by querying Table 2 based on the value 7 of the MCS subfield, that the MCS of the first space-time stream group is 64-QAM, where R=5/6; obtains, by querying Table 5 based on the value 7 of the difference MCS index subfield, that the value of the difference MCS of the second space-time stream group is 0, the value of the difference MCS of the third space-time stream group is 0, the value of the difference MCS of the fourth space-time stream group is 3; and then obtains, by querying Table 3 based on the value 0 of the difference MCS of the second space-time stream group, the value 0 of the difference MCS of the third space-time stream group, and the value 3 of the difference MCS of the fourth space-time stream group, that the modulation of the second space-time stream group is 64-QAM, where code rate R=5/6; the modulation of the third space-time stream group is 64-QAM, where code rate R=5/6; and the modulation of the fourth space-time stream group is 4096-QAM, where code rate R=5/6.

Corresponding to the third example in step 201, the MCS field includes the difference MCS index subfield. The receive end may obtain the MCS of the first space-time stream group and the difference MCS of the another space-time stream group based on the value of the difference MCS index subfield, and then determine the MCS of the another space-time stream group based on the difference MCS.

For example, the receive end may obtain the value of the MCS of the first space-time stream group and the value of the difference MCS of the another space-time stream group by querying Table 6 based on the value of the difference MCS index subfield, obtain the MCS of the first space-time stream group by querying Table 2 based on the value of the MCS of the first space-time stream group, and then obtain the MCS of the another space-time stream group by querying Table 3 based on the value of the difference MCS of the another space-time stream group. For example, the first PPDU received by the receive end includes four space-time stream groups, and a value of the received difference MCS index subfield is 7. In this case, the receive end obtains, by querying Table 6 based on the value 7 of the difference MCS index subfield, that the value of the MCS of the first space-time stream group is 0, the value of the difference MCS of the second space-time stream group is 0, the value of the difference MCS of the third space-time stream group is 0, and the value of the difference MCS of the fourth space-time stream group is 3; obtains, by querying Table 2 based on the value 0 of the MCS of the first space-time stream group, that the MCS of the first space-time stream group is binary phase shift keying BPSK, where R=1/2; and then obtains, by querying Table 3 based on the value 0 of the difference MCS of the second space-time stream group, the value 0 of the difference MCS of the third space-time stream group, and the value 3 of the difference MCS of the fourth space-time stream group, that the modulation of the second space-time stream group is binary phase shift keying BPSK, where code rate R=1/2; the modulation of the third space-time stream group is binary phase shift keying BPSK, where code rate R=1/2; and the modulation of the fourth space-time stream group is 64-QAM, where code rate R=1/2.

In conclusion, according to the information indication method provided in this embodiment of this application, the generated first PPDU includes space-time stream groups and the MCS field. The MCS field is used to indicate the MCS of the first space-time stream group and the difference MCS of the another space-time stream group. The MCS field is used to indicate the MCS of the space-time stream group, an MCS of each space-time stream does not need to be indicated, the MCS field is used to indicate the difference MCS of the another space-time stream group, and a quantity of bits of the difference MCS is relatively small. Therefore, transmission overheads of a PPDU are reduced, so that on the premise that the transmitted PPDU includes a relatively large quantity of space-time streams and the MCS field is used to indicate a plurality of MCSs, a relatively high throughput can be achieved, thereby providing a structure of a data frame for indicating an MCS for a next-generation standard.

As described in the foregoing step 201, the transmit end may group the to-be-transmitted space-time streams based on the grouping status to obtain the space-time stream groups in the first PPDU. Correspondingly, the receive end needs to obtain the grouping status, so that the receive end determines a grouping status of the space-time stream groups in the first PPDU based on the grouping status when receiving the first PPDU. In this embodiment of this application, the transmit end and the receive end may obtain the grouping status in the following several example manners.

In a first example manner, the transmit end and the receive end agree on the grouping status by using a second PPDU.

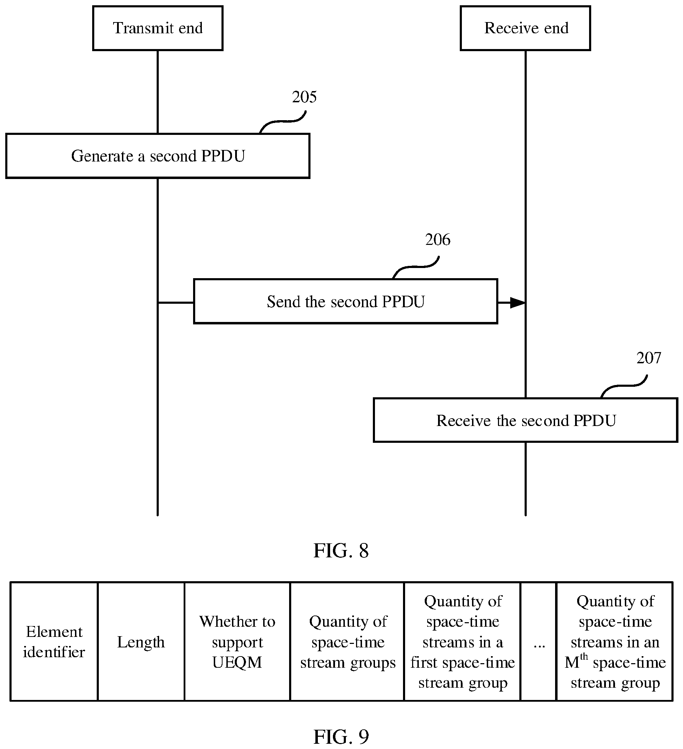

As shown in FIG. 8, before step 201, the information indication method further includes the following steps.

Step 205: The transmit end generates the second PPDU.

The second PPDU includes a grouping field. The grouping field is used to indicate a grouping status of a space-time stream group. The grouping status may include a quantity of space-time stream groups and a quantity of space-time streams of each space-time stream group.

For example, a value of the grouping field in the second PPDU includes the quantity of space-time stream groups and the quantity of space-time streams included in each space-time stream group. FIG. 9 is a schematic structural diagram of a grouping field according to an embodiment of this application. The grouping field includes an element identifier (Element ID) subfield, a length subfield, a subfield indicating whether to support UEQM, a quantity of space-time stream groups subfield, a quantity of space-time streams subfield of a first space-time stream group, a quantity of space-time streams subfield of a second space-time stream group, ..., and a quantity of space-time streams subfield of an M^{th} space-time stream group, where M indicates a quantity of space-time stream groups, and M is a positive integer. The element identifier subfield is used to uniquely identify the grouping field. For example, a value of the element identifier subfield is 1, indicating a grouping field 1. The length subfield is used to indicate a length of the grouping field, and a value of the length subfield is a quantity of bits of the grouping field. The subfield indicating whether to support UEQM is used to indicate whether the transmit end supports a UEQM scheme. The quantity of space-time stream groups subfield is used to indicate a quantity of space-time stream groups. The quantity of space-time streams subfield of the first space-time stream group to the quantity of space-time streams subfield of the M^{th} space-time stream group each are used to indicate a quantity of space-time streams of a corresponding space-time stream group. Optionally, the second PPDU may be a management frame, for example, a beacon frame, an association request frame (in this case, the transmit end and the receive end negotiate the grouping status in an association process), or a reassociation request frame (in this case, the transmit end and the receive end negotiate the grouping status in a reassociation process).

In FIG. 9, an example in which the grouping field is used to indicate one grouping status is used for description. During actual application, the grouping field may be used to indicate grouping statuses corresponding to different quantities of space-time streams. In other words, the grouping field may be used to indicate a plurality of grouping statuses. In this case, the grouping field may include a plurality of the quantity of space-time stream groups subfields, and subfields that are in a one-to-one correspondence with the plurality of the quantity of space-time stream groups subfields and that are used to indicate a quantity of space-time streams of each space-time stream group.

Step 206: The transmit end sends the second PPDU.

For example, in a first implementation, after grouping the to-be-transmitted space-time streams, the transmit end generates the second PPDU based on the grouping status, and sends the second PPDU, to notify the receive end of the grouping status of the space-time stream group. For example, the transmit end groups to-be-transmitted 12 space-time streams into four space-time stream groups, and each space-time stream group includes three space-time streams. In this case, the transmit end generates the second PPDU based on the grouping status. In the grouping field in the second PPDU, a value of the quantity of space-time stream groups subfield is 4, and a value of the quantity of space-time streams subfield of the first space-time stream group, a value of the quantity of space-time streams subfield of the second space-time stream group, a value of the quantity of space-time streams subfield of the third space-time stream group, and a value of the quantity of space-time streams subfield of the fourth space-time stream group are all 3. The transmit end sends the generated second PPDU to notify the receive end that the grouping status of the space-time stream groups in the second PPDU is that there are four space-time stream groups and each of the space-time stream groups includes three space-time streams. In the first implementation, the transmit end notifies the receive end of the grouping status unilaterally, so that network overheads caused when the to-be-transmitted space-time streams are grouped can be reduced.

In a second implementation, the transmit end may receive feedback information after sending the second PPDU, where the feedback information includes a positive feedback and a negative feedback, the positive feedback is used to indicate to the receive end that grouping is allowed to be performed by using the grouping status indicated by using the grouping field in the second PPDU, and the negative feedback is used to indicate to the receive end that grouping is not allowed to be performed by using the grouping status indicated by using the grouping field in the second PPDU. When the feedback information is the positive feedback, the transmit end groups the to-be-transmitted space-time streams by using the grouping status indicated by using the grouping field. When the feedback information is the negative feedback, the transmit end regenerates a second PPDU, and sends the regenerated second PPDU. A grouping field in the regenerated second PPDU is used to indicate another grouping status. In other words, the another grouping status is different from the foregoing grouping status.

For example, it is assumed that there are 12 to-be-transmitted space-time streams, the grouping status indicated by using the grouping field in the generated second PPDU is that there are four space-time stream groups and each of the space-time stream groups includes three space-time streams. After the transmit end sends the second PPDU, when the received feedback information is the negative feedback, the transmit end regenerates the second PPDU. The grouping status indicated by using the grouping field in the regenerated second PPDU is that there are three space-time stream groups, the first space-time stream group includes four space-time streams, the second space-time stream group includes five space-time streams, and the third space-time stream group includes three space-time streams. The transmit end sends the regenerated second PPDU. When the received feedback information is the positive feedback, the transmit end groups the to-be-transmitted space-time streams by using the grouping status. In the second implementation, the transmit end determines the grouping status of the to-be-transmitted space-time streams by using the received feedback information, thereby improving flexibility of grouping the space-time streams.

Optionally, in the second implementation, in an example, the transmit end may continue to send the regenerated second PPDU each time the transmit end receives the negative feedback, until the transmit end receives the positive feedback. Then, the transmit end groups the to-be-transmitted space-time streams by using the grouping status, corresponding to the positive feedback, indicated by using the grouping field in the second PPDU. In another example, after continuously receiving the negative feedback for a times (that is, a quantity of times of receiving the negative feedback reaches an upper limit), the transmit end determines that negotiation with the receive end fails, and may usually determine that the receive end does not support an unequal transmission mode. In a subsequent process, a PPDU is transmitted in an equal mode. In this way, overheads caused by continuously sending the second PPDU for a plurality of times can be avoided. a is a specified quantity of times threshold. For example, a is one of 2 to 5.

Step 207: The receive end receives the second PPDU.

For example, corresponding to the first implementation in step 206, after receiving the second PPDU, the receive end determines, as the grouping status of the space-time stream groups in the second PPDU, the grouping status indicated by using the grouping field in the second PPDU. Corresponding to the second implementation in step 206, after receiving the second PPDU, the receive end may send the feedback information to the transmit end. For example, the receive end may determine a type of the feedback information based on a current status. When the grouping status indicated by using the grouping field in the second PPDU conforms to the current status of the receive end, the receive end sends the positive feedback to the transmit end, determines, as the grouping status of the space-time stream groups in the second PPDU, the grouping status indicated by using the grouping field in the second PPDU. When the grouping status indicated by using the grouping field in the second PPDU does not conform to the current status of the receive end, the receive end sends the negative feedback to the transmit end. After sending the negative feedback, the receive end receives the regenerated second PPDU sent by the transmit end.

Further, corresponding to the two examples in the second implementation in step 206, when the transmit end continues to send the regenerated second PPDU, the receive end continues to receive the regenerated second PPDU, and continues to determine the type of the feedback information based on the current status, until the grouping status indicated by using the grouping field in the received second PPDU conforms to the current status. The receive end sends the positive feedback to the transmit end, and determines, as the grouping status of the space-time stream groups in the second PPDU, the grouping status, corresponding to the positive feedback, indicated by using the grouping field in the second PPDU. After the receive end continuously sends the negative feedback for a times (that is, a quantity of times of sending the negative feedback reaches an upper limit), the transmit end directly groups the to-be-transmitted space-time streams based on the grouping status indicated by using the grouping field in the second PPDU sent for an a^{th} time. Correspondingly, the receive end receives, in a subsequent process, the PPDU transmitted in the equal mode.

It should be noted that, after the transmit end and the receive end negotiate the grouping status by using the second PPDU, when the to-be-transmitted space-time streams are subsequently sent, the grouping status does not change by default, and the grouping status does not need to be renegotiated. The transmit end may directly group the to-be-transmitted space-time streams based on the grouping status indicated by using the grouping field in the second PPDU. In this case, step 205 to step 207 may be performed only once. In this way, overheads caused when the to-be-transmitted space-time streams are grouped can be reduced. During actual implementation of this application, because a networking architecture or a transmission rule of a data transmission system may vary with an actual situation, correspondingly, the grouping status may be updated. After the grouping status is updated, the transmit end and the receive end may perform steps 205 to 207 again, to ensure validity of the grouping status. It should be noted that the first PPDU and the second PPDU are usually sent at different frequency.

In a second example manner, the transmit end and the receive end agree on the grouping status in advance. The grouping status may be configured during networking of a data transmission system, for example, may be burned into chips of the transmit end and the receive end. In this case, step 205 to step 207 may not be performed, to improve flexibility of indicating the grouping status.

In a third example manner, as shown in FIG. 4, the first PPDU includes an NSTS field used to indicate a quantity of space-time streams. Then, a one-to-one correspondence between a quantity of space-time streams and a grouping status may be preset, and the grouping status of the space-time stream group is indicated by using the NSTS field. In this case, step 205 to step 207 may not be performed. In this way, when sending the first PPDU, the transmit end may directly indicate, by using the NSTS field, the grouping status of the space-time stream groups in the first PPDU, thereby reducing transmission overheads. For example, in the following Table 7, Table 7 shows a one-to-one correspondence between a quantity of space-time streams and a grouping status. If a quantity of to-be-transmitted space-time streams is 11, a value of the NSTS field in the first PPDU is 11. It can be learned based on Table 7 that 11 is used to indicate that a quantity of space-time stream groups of the 11 to-be-transmitted space-time streams is 4, there are three space-time streams in each of three space-time stream groups, and there are two space-time streams in one space-time stream group. It should be noted that the one-to-one correspondence between the quantity of space-time streams and the grouping status shown in Table 7 is merely an example for description. The correspondence is not limited in this embodiment of this application.

**Table 7**

| Quantity of space-time streams | Grouping status | |
|---|---|---|
| | Quantity of space-time stream groups | Quantity of space-time streams in each space-time stream group |
| 2 | 2 | 1+1 |
| 3 | 2 | 1+2 |
| 4 | 3 | 1+1+2 |
| 5 | 4 | 1+1+1+2 |
| 6 | 4 | 1+1+2+2 |
| 7 | 4 | 1+2+2+2 |
| 8 | 4 | 2+2+2+2 |
| 9 | 4 | 2+2+2+3 |
| 10 | 4 | 2+2+3+3 |
| 11 | 4 | 2+3+3+3 |
| 12 | 4 | 3+3+3+3 |
| 13 | 4 | 3+3+3+4 |
| 14 | 4 | 3+3+4+4 |
| 15 | 4 | 3+4+4+4 |
| 16 | 4 | 4+4+4+4 |

In a fourth example manner, the MCS field in the first PPDU is further used to indicate grouping statuses of the first space-time stream group and the another space-time stream group. In this case, step 205 to step 207 may not be performed. In this way, when sending the first PPDU, the transmit end may indicate the grouping statuses of the space-time stream groups in the first PPDU and the another space-time stream group, and does not need to group space-time streams in the first PPDU based on a grouping status that is preset or agreed on in advance, thereby improving flexibility of indicating the grouping status. For example, when the grouping status is indicated by using the MCS field, some fixed parameters may be preset (the fixed parameters may be agreed on in advance by the transmit end and the receive end, and do not need to be carried in the first PPDU), and some variable parameters are indicated by using the MCS field. The fixed parameter may include at least one of a quantity of groups, a difference MCS, and a quantity of space-time streams in each space-time stream group. The variable parameter may include at least one of a quantity of groups, a difference MCS, and a quantity of space-time streams in each space-time stream group. For example, the quantity of groups and a relationship (for example, in ascending order or in descending order) between each difference MCS and the MCS of the first space-time stream group may be preset, and the MCS field is used to indicate a start space-time stream of each space-time stream group, to determine a location of each space-time stream group. In an example, it is assumed that the quantity of groups is a fixed value, there are two groups, and the relationship between each difference MCS and the MCS of the first space-time stream group is in ascending order. In this case, the MCS field may be used to indicate that the second space-time stream group starts from a k^{th} (k> 1) space-time stream (which is equivalent to indicating specific space-time streams belonging to the first space-time stream group and specific space-time streams belonging to the second space-time stream group). In other words, the k^{th} space-time stream is a start space-time stream of the second space-time stream group. In this case, the first space-time stream group includes the 1st space-time stream to a (k-1)^{th} space-time stream, and the second space-time stream group includes the k^{th} space-time stream to the last space-time stream. By setting some fixed parameters and indicating some variable parameters, an appropriate manner of indicating the grouping status can be selected based on an actual requirement, so that transmission overheads and grouping flexibility are balanced. For example, when transmission overheads need to be reduced, the quantity of groups and the quantity of space-time streams in each space-time stream group may be preset, so that the transmit end does not need to send the field used to indicate the grouping status. When grouping flexibility needs to be improved, for different PPDUs, different grouping statuses may be indicated by using the MCS field.

It should be noted that a sequence of the steps of the information indication method provided in this embodiment of this application may be properly adjusted, and the steps may be correspondingly added or reduced based on a situation. For example, step 205 to step 207 may not be performed, and the grouping status is directly indicated by using the NSTS field or the MCS field in the first PPDU. Any variation method readily figured out by a person skilled in the art within the technical scope disclosed in this application shall fall within the protection scope of this application. Therefore, details are not described again herein.

In the first implementation, because the MCS of the first space-time stream group may be indicated by using a value of the MCS field, a quantity of bits of the MCS field is reduced, and transmission overheads are further reduced. In addition, because the to-be-transmitted space-time streams may be grouped in a plurality of manners to obtain the space-time stream group, indication flexibility of the MCS field is improved, so that transmission overheads and indication flexibility of the MCS field are balanced.

In conclusion, according to the information indication method provided in this embodiment of this application, the generated first PPDU includes space-time stream groups and the MCS field. The MCS field is used to indicate the MCS of the first space-time stream group and the difference MCS of the another space-time stream group. The MCS field is used to indicate the MCS of the space-time stream group, an MCS of each space-time stream does not need to be indicated, the MCS field is used to indicate the difference MCS of the another space-time stream group, and a quantity of bits of the difference MCS is relatively small. Therefore, transmission overheads of a PPDU are reduced, so that on the premise that the transmitted PPDU includes a relatively large quantity of space-time streams and the MCS field is used to indicate a plurality of MCSs, a relatively high throughput can be achieved, thereby providing a structure of a data frame for indicating an MCS for a next-generation standard.

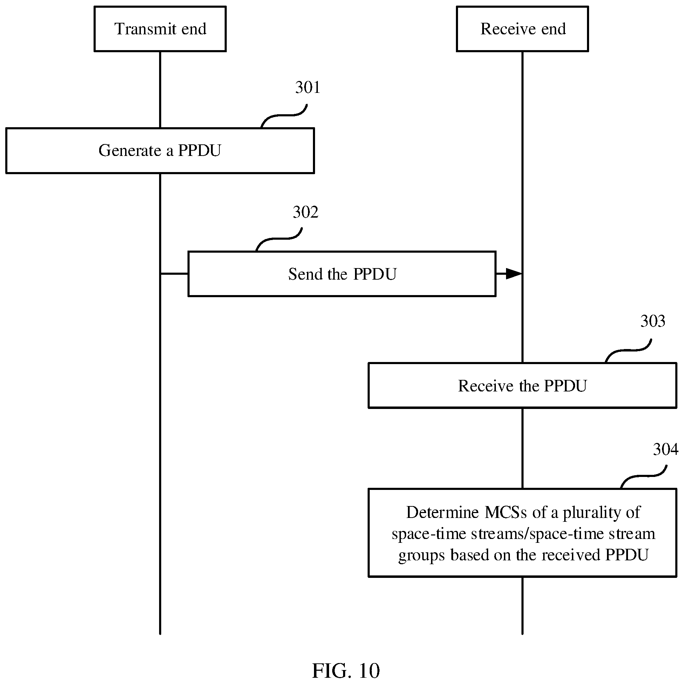

In a second implementation, the PPDU includes a space-time stream and an MCS field, and the MCS field includes an indication subfield and at least one MCS subfield. FIG. 10 is a flowchart of another information indication method according to an embodiment of this application. The method includes the following steps.

Step 301: A transmit end generates a PPDU.

The PPDU may include a plurality of space-time streams or a plurality of space-time stream groups. A structure of the PPDU is described by using the following two cases as examples in this application.

In a first case, the PPDU includes a plurality of space-time streams, the PPDU includes an MCS field, the MCS field includes an indication subfield and at least one MCS subfield, the indication subfield is used to indicate modulation schemes of the plurality of space-time streams, and each MCS subfield is used to indicate an MCS of at least one space-time stream.

When a value of the indication subfield is a first value, the indication subfield is used to indicate that the modulation schemes of the plurality of space-time streams are equal modulation schemes, and the MCS subfield is used to indicate a same MCS of the plurality of space-time streams. Optionally, the first value may be 0. When a value of the indication subfield is a second value, the indication subfield is used to indicate that the modulation schemes of the plurality of space-time streams are unequal modulation schemes, and the MCS subfield is used to indicate the MCS of the at least one space-time stream. For example, when the first value is 0, the second value may be 1.

For example, a preamble of the PPDU includes an extremely high throughput signaling field A (Extremely High Throughput-Signal Field A, EHT-SIG-A) and an extremely high throughput signaling field B (Extremely High Throughput-Signal Field B, EHT-SIG-B), the indication subfield may be located in the EHT-SIG-A, and the at least one MCS subfield may be located in the EHT-SIG-A or the EHT-SIG-B.

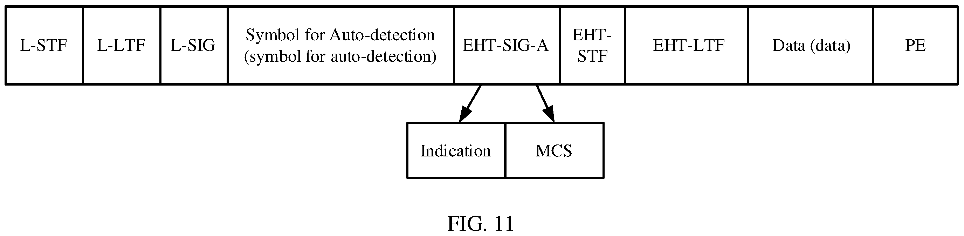

When the value of the indication field is the first value, the MCS field includes one MCS subfield. In an implementation, the MCS subfield is located in the EHT-SIG-A. FIG. 11 is a schematic structural diagram of a PPDU according to an embodiment of this application. The PPDU includes a legacy short training field (legacy short training field, L-STF), a legacy long training field (legacy long training field, L-LTF), a legacy signaling (legacy signal, L-SIG) field, a symbol for auto-detection (symbol for auto-detection) field, an EHT-SIG-A field, an extremely high throughput short training field (extremely high throughput short training field, EHT-STF), an extremely high throughput long training field (extremely high throughput long training field, EHT-LTF), a data (Data) field, and a PE field that are sequentially arranged. Both the indication subfield and the MCS subfield are located in the EHT-SIG-A, and the MCS subfield is used to indicate the same MCS of the plurality of space-time streams.

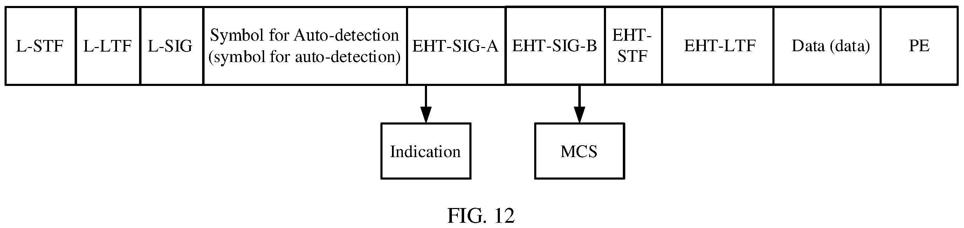

In another implementation, the MCS subfield is located in the EHT-SIG-B. FIG. 12 is a schematic structural diagram of another PPDU according to an embodiment of this application. The PPDU includes an L-STF, an L-LTF, an L-SIG field, a symbol for auto-detection field, an EHT-SIG-A, an EHT-SIG-B, an EHT-STF, an EHT-LTF, a data field, and a PE field that are sequentially arranged. The indication subfield is located in the EHT-SIG-A, the MCS subfield is located in the EHT-SIG-B, and the MCS subfield is used to indicate a same MCS of a plurality of space-time streams.

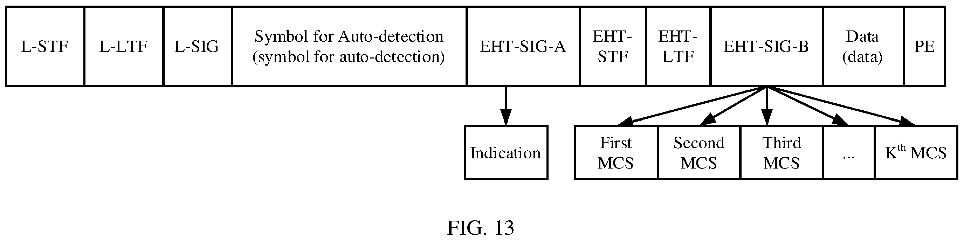

For example, when the value of the indication subfield is the second value, in a first example, the MCS field includes a plurality of MCS subfields, and each MCS subfield is used to indicate an MCS of one space-time stream. It is assumed that the PPDU includes K (K>1) space-time streams, and correspondingly, the MCS field includes K MCS subfields. The K space-time streams are respectively a first space-time stream, a second space-time stream, a third space-time stream, ..., and a K^{th} space-time stream. Correspondingly, the K MCS subfields are respectively a first MCS subfield, a second MCS subfield, a third MCS subfield, ..., and a K^{th} MCS subfield. FIG. 13 is a schematic structural diagram of still another PPDU according to an embodiment of this application. The PPDU includes an L-STF, an L-LTF, an L-SIG field, a symbol for auto-detection field, an EHT-SIG-A, an EHT-STF, an EHT-LTF, an EHT-SIG-B, a data field, and a PE field that are sequentially arranged. The EHT-SIG-B may be divided into K spaces, and the K spaces are in a one-to-one correspondence with the K MCS subfields. Refer to FIG. 13. The indication subfield is located in the EHT-SIG-A, and each MCS subfield is located in one space of the EHT-SIG-B.

Optionally, in the first example, the first MCS subfield in the K MCS subfields may be located in the EHT-SIG-A, and the other K-1 MCS subfields are located in K-1 spaces of the EHT-SIG-B, provided that it is ensured that an arrangement sequence of the MCS subfields is in a one-to-one correspondence with an arrangement sequence of the indicated space-time streams. This is not limited in this embodiment of this application.

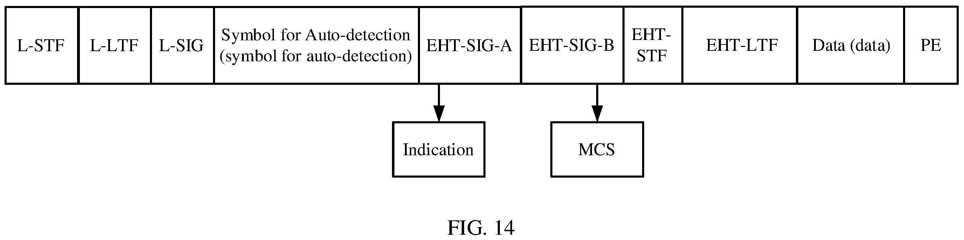

In a second example, the MCS field includes one MCS subfield, and the MCS subfield is used to separately indicate MCSs of a plurality of space-time streams. For example, FIG. 14 is a schematic structural diagram of yet another PPDU according to an embodiment of this application. The PPDU includes an L-STF, an L-LTF, an L-SIG field, a symbol for auto-detection field, an EHT-SIG-A, an EHT-SIG-B, an EHT-STF, an EHT-LTF, a data field, and a PE field that are sequentially arranged. The indication subfield is located in the EHT-SIG-A, and the MCS subfield is located in the EHT-SIG-B. Optionally, in the MCS subfield, a value that is used to indicate an MCS of the first space-time stream may be located in the EHT-SIG-A, and K-1 values that are used to indicate MCSs of the other K-1 space-time streams may be located in the EHT-SIG-B, provided that it is ensured that an arrangement sequence of the values in the MCS subfield is in a one-to-one correspondence with an arrangement sequence of the indicated space-time streams. This is not limited in this embodiment of this application.

In a second case, the PPDU includes a plurality of space-time stream groups, the PPDU includes an MCS field, the MCS field includes an indication subfield and at least one MCS subfield, the indication subfield is used to indicate modulation schemes of the plurality of space-time stream groups, and each MCS subfield is used to indicate an MCS of at least one space-time stream group. It should be noted that, for a grouping status of the plurality of space-time stream groups, refer to the grouping status in step 205 to step 207. The grouping status may be preset or agreed on in advance (refer to related content in step 205 to step 207), or may be carried in an NSTS field or an MCS field.

When a value of the indication subfield is a first value, the indication subfield is used to indicate that the modulation schemes of the plurality of space-time stream groups are equal modulation schemes, and the MCS subfield is used to indicate a same MCS of the plurality of space-time stream groups. Optionally, the first value may be 0. When a value of the indication subfield is a second value, the indication subfield is used to indicate that the modulation schemes of the plurality of space-time stream groups are unequal modulation schemes, and the MCS subfield is used to indicate the MCS of the at least one space-time stream group. For example, when the first value is 0, the second value may be 1.

For example, a preamble of the PPDU includes an EHT-SIG-A and an EHT-SIG-B, the indication subfield may be located in the EHT-SIG-A, and the at least one MCS subfield may be located in the EHT-SIG-A or the EHT-SIG-B.

When the value of the indication field is the first value, the MCS field includes one MCS subfield. In an implementation, the MCS subfield is located in the EHT-SIG-A, and the MCS subfield is used to indicate the same MCS of the plurality of space-time stream groups. In this implementation, for a structure of the preamble of the PPDU, refer to the structure shown in FIG. 11. Details are not described herein again in this embodiment of this application.

In another implementation, the MCS subfield is located in the EHT-SIG-B, and the MCS subfield is used to indicate the same MCS of the plurality of space-time stream groups. In this implementation, for a structure of the preamble of the PPDU, refer to the structure shown in FIG. 12. Details are not described herein again in this embodiment of this application.

For example, when the value of the indication subfield is the second value, in a first example, the MCS field includes a plurality of MCS subfields, and each MCS subfield is used to indicate an MCS of one space-time stream group. It is assumed that the PPDU includes L space-time stream groups, and correspondingly, the MCS field includes L MCS subfields. The L space-time stream groups are respectively a first space-time stream group, a second space-time stream group, a third space-time stream group, ..., and an L^{th} space-time stream group. Correspondingly, the LMCS subfields are respectively a first MCS subfield, a second MCS subfield, a third MCS subfield, ..., and an L^{th} MCS subfield. In this example, for a structure of the preamble of the PPDU, refer to the structure shown in FIG. 13. In this case, the EHT-SIG-B may be divided into L spaces, the indication subfield is located in the EHT-SIG-A, and each MCS subfield is located in one space of the EHT-SIG-B.

Optionally, in the first example, the first MCS subfield in the L MCS subfields may be located in the EHT-SIG-A, and the other L-1 MCS subfields are located in L-1 spaces of the EHT-SIG-B, provided that it is ensured that an arrangement sequence of the MCS subfields is in a one-to-one correspondence with an arrangement sequence of the indicated space-time stream groups. This is not limited in this embodiment of this application.

In a second example, the MCS field includes one MCS subfield, and the MCS subfield is used to separately indicate MCSs of a plurality of space-time stream groups. In this example, for a structure of the preamble of the PPDU, refer to the structure shown in FIG. 14. In this case, the indication subfield is located in the EHT-SIG-A, and the MCS subfield is located in the EHT-SIG-B. Optionally, in the MCS subfield, a value that is used to indicate an MCS of the first space-time stream group may be located in the EHT-SIG-A, and L-1 values that are used to indicate MCSs of the other L-1 space-time stream groups may be located in the EHT-SIG-B, provided that it is ensured that an arrangement sequence of the values in the MCS subfield is in a one-to-one correspondence with an arrangement sequence of the indicated space-time stream groups. This is not limited in this embodiment of this application.

Step 302: The transmit end sends the PPDU.

For example, the transmit end may send the PPDU based on the 802.11 series protocols of a WLAN.

Step 303: A receive end receives the PPDU.

For example, the receive end may receive the PPDU based on the 802.11 series protocols of the WLAN.

Step 304: The receive end determines MCSs of a plurality of space-time streams/space-time stream groups based on the received PPDU.

The PPDU includes an MCS field, and the receive end may determine the MCSs of the plurality of space-time streams/space-time stream groups based on a value of the MCS field.

In a first case, the PPDU received by the receive end includes the plurality of space-time streams, and the receive end may determine modulation schemes of the plurality of space-time streams based on the value of the indication subfield, and then determine the MCS of the at least one space-time stream based on the modulation schemes and the value of the MCS subfield.

When the value of the indication subfield received by the receive end is the first value, the receive end determines that the modulation schemes of the plurality of space-time streams are equal modulation, and then the receive end determines the same MCS of the plurality of space-time streams based on the MCS subfield. When the value of the indication subfield received by the receive end is the second value, the receive end determines that the modulation schemes of the plurality of space-time streams are unequal modulation, and then the receive end determines the MCS of the at least one space-time stream based on the MCS subfield.

For example, the receive end may determine the modulation schemes of the plurality of space-time streams from the indication subfield in the EHT-SIG-A in the PPDU. If the value of the indication subfield is the first value, the receive end may determine the same MCS of the plurality of space-time streams based on one MCS subfield in the EHT-SIG-A or the EHT-SIG-B in the PPDU.

If the value of the indication subfield is the second value, corresponding to the first example in step 301, the MCS field includes the plurality of MCS subfields, and each MCS subfield is used to indicate an MCS of one space-time stream. It is assumed that the PPDU includes the K space-time streams, and the receive end may separately determine MCSs of the corresponding space-time streams based on the K MCS subfields in the K spaces. For example, the receive end may determine the MCS of the first space-time stream based on the first MCS subfield in the EHT-SIG-B, determine the MCS of the second space-time stream based on the second MCS subfield in the EHT-SIG-B, determine the MCS of the third space-time stream based on the third MCS subfield in the EHT-SIG-B, ..., and determine the MCS of the K^{th} space-time stream based on the K^{th} MCS subfield in the EHT-SIG-B. Corresponding to the second example in step 301, the MCS field includes one MCS subfield, and the MCS subfield is used to separately indicate the MCSs of the plurality of space-time streams. In this case, the receive end may determine the MCS of the first space-time stream, the MCS of the second space-time stream, the MCS of the third space-time stream, ..., and the MCS of the K^{th} space-time stream based on the MCS subfield in the EHT-SIG-B.

In a second case, the PPDU received by the receive end includes the plurality of space-time stream groups, and the receive end may determine the modulation schemes of the plurality of space-time stream groups based on the value of the indication subfield, and then determine the MCS of the at least one space-time stream group based on the modulation schemes and the value of the MCS subfield.

When the value of the indication subfield received by the receive end is the first value, the receive end determines that the modulation schemes of the plurality of space-time stream groups are equal modulation, and then the receive end determines the same MCS of the plurality of space-time stream groups based on the MCS subfield. When the value of the indication subfield received by the receive end is the second value, the receive end determines that the modulation schemes of the plurality of space-time stream groups are unequal modulation, and then the receive end determines the MCS of the at least one space-time stream group based on the MCS subfield.

For example, the receive end may determine the modulation schemes of the plurality of space-time stream groups based on the indication subfield in the EHT-SIG-A in the PPDU. If the value of the indication subfield is the first value, the receive end may determine the same MCS of the plurality of space-time stream groups based on one MCS subfield in the EHT-SIG-A or the EHT-SIG-B in the PPDU.

If the value of the indication subfield is the second value, corresponding to the first example in step 301, the MCS field includes the plurality of MCS subfields, and each MCS subfield is used to indicate an MCS of one space-time stream group. It is assumed that the PPDU includes the L space-time stream groups, and the receive end may separately determine MCSs of the corresponding space-time stream groups based on the L MCS subfields in the L spaces. For example, the receive end may determine the MCS of the first space-time stream group based on the first MCS subfield in the EHT-SIG-B, determine the MCS of the second space-time stream group based on the second MCS subfield in the EHT-SIG-B, determine the MCS of the third space-time stream group based on the third MCS subfield in the EHT-SIG-B, ..., and determine the MCS of the L^{th} space-time stream group based on the L^{th} MCS subfield in the EHT-SIG-B. Corresponding to the second example in step 301, the MCS field includes one MCS subfield, and the MCS subfield is used to separately indicate the MCSs of the plurality of space-time stream groups. In this case, the receive end may determine the MCS of the first space-time stream group, the MCS of the second space-time stream group, the MCS of the third space-time stream group, ..., and the MCS of the L^{th} space-time stream group based on the MCS subfield in the EHT-SIG-B.

In the second implementation, when the modulation schemes used for the plurality of space-time stream groups are unequal modulation, a structure of the MCS field except the indication subfield in this embodiment may be replaced with a structure of any MCS field in the embodiment corresponding to the first implementation. In an example, the MCS field in this embodiment includes the indication subfield, the MCS subfield, and the at least one difference MCS subfield (that is, in the MCS field in this embodiment, the at least one MCS subfield is one MCS subfield, and the at least one difference MCS subfield is further included). For structures and functions of the MCS subfield and the at least one difference MCS subfield, refer to the structures and the functions of the subfields in the MCS shown in FIG. 5. In another example, the MCS field in this embodiment includes the indication subfield, the MCS subfield, and the difference MCS index subfield (that is, in the MCS field in this embodiment, the at least one MCS subfield is one MCS subfield, and the at least one difference MCS index subfield is further included). For structures and functions of the MCS subfield and the difference MCS index subfield, refer to the structures and the functions of the subfields in the MCS shown in FIG. 6. In still another example, the MCS field in this embodiment includes the indication subfield and the difference MCS index subfield (that is, in the MCS field in this embodiment, the at least one MCS subfield is one MCS subfield, and a function of the MCS subfield is the same as a function of the difference MCS index subfield). For a structure and the function of the difference MCS index subfield, refer to the structure and the function of the subfield in the MCS shown in FIG. 7. Details are not described herein again in this embodiment of this application.

It should be noted that, in a related technology, different values of the MCS field are used to indicate an MCS of each space-time stream based on different modulation schemes. For example, when the value of the MCS field falls within a range from 0 to 31, an MCS of each space-time stream based on the equal modulation scheme is indicated. When the value of the MCS field falls within a range from 32 to 76, an MCS of each space-time stream based on the unequal modulation scheme is indicated. In this embodiment of this application, the indication subfield is used to indicate a modulation scheme of the PPDU, and the MCS subfield is used to indicate an MCS of each space-time stream based on the modulation scheme indicated by using the indication subfield, so that the MCS of each space-time stream based on two modulation schemes can be indicated by using values of a same MCS field, compared with the related technology, a value range of the MCS field is reduced, so that a quantity of bits of the MCS field is reduced, and transmission overheads of the PPDU are further reduced.

In conclusion, according to the information indication method provided in this embodiment of this application, the indication subfield in the MCS field in the generated PPDU is used to indicate whether a modulation scheme is equal modulation or unequal modulation, and the MCS subfield is used to indicate an MCS of each space-time stream/space-time stream group in the PPDU based on the modulation scheme indicated by using the indication subfield. Therefore, the value range of the MCS field is reduced, and the quantity of bits of the MCS field is further reduced, thereby reducing transmission overheads of the PPDU, so that on the premise that the transmitted PPDU includes a relatively large quantity of space-time streams and the MCS field is used to indicate a plurality of MCSs, a relatively high throughput can be achieved, thereby providing a structure of a data frame for indicating an MCS for a next-generation standard.

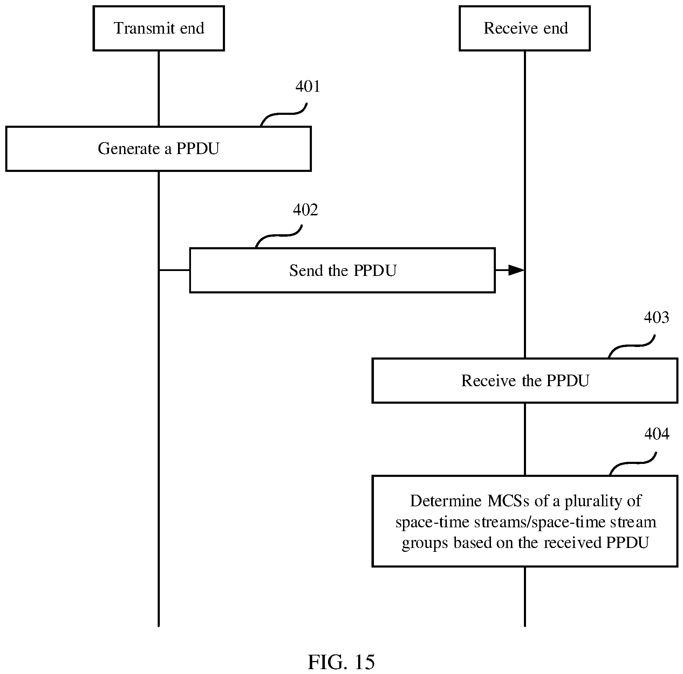

In a third implementation, the PPDU includes a space-time stream and an MCS field, and the MCS field may include only an indication subfield or include an indication subfield and an MCS subfield. FIG. 15 is a flowchart of still another information indication method according to an embodiment of this application. The method includes the following steps.

Step 401: A transmit end generates a PPDU.

The PPDU includes an MCS field, and the MCS field includes an indication subfield. When the PPDU includes a plurality of space-time streams, in a first case, when a value of the indication subfield is a valid value, the indication subfield is used to indicate that modulation schemes of the plurality of space-time streams are equal modulation, and indicate that the MCS is used for the plurality of space-time streams. The valid value is a value used to indicate the MCS. For example, in the following Table 8, Table 8 shows a one-to-one correspondence between a value of the MCS field and indicated content. Refer to Table 8. When the value of the MCS field falls within a range from 1 to 14, the MCS is indicated. Therefore, the valid value is any one of 1 to 14. For example, when the value of the indication subfield is 0, it indicates that the modulation schemes of the plurality of space-time streams are equal modulation, and indicates that the MCS used for the plurality of space-time streams is binary phase shift keying BPSK, where R=1/2.

**Table 8**

| MCS field | Indicated content |
|---|---|
| 0 | Binary phase shift keying BPSK, where R=1/2 |
| 1 | Quadrature phase shift keying QPSK, where R=1/2 |
| 2 | QPSK, where R=3/4 |
| 3 | 16-QAM (quadrature amplitude modulation), where R=1/2 |
| 4 | 16-QAM (quadrature amplitude modulation), where R=3/4 |
| 5 | 64-QAM, where R=2/3 |
| 6 | 64-QAM, where R=3/4 |
| 7 | 64-QAM, where R=5/6 |
| 8 | 256-QAM, where R=3/4 |
| 9 | 256-QAM, where R=5/6 |
| 10 | 1024-QAM, where R=3/4 |
| 11 | 1024-QAM, where R=5/6 |
| 12 | 4096-QAM, where R=3/4 |
| 13 | 4096-QAM, where R=5/6 |
| 14 | 4096-QAM, where R=7/8 |
| 15 | Unequal modulation |

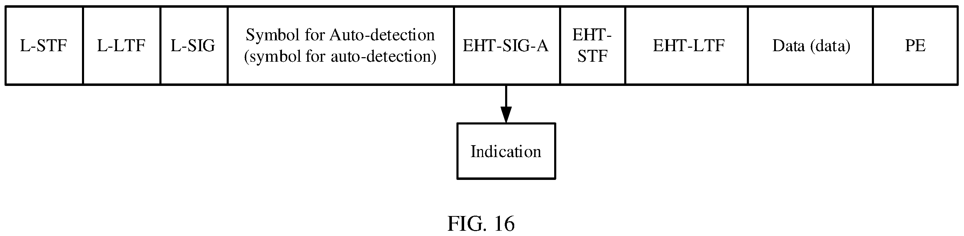

For the first case, as described in step 301, a preamble of the PPDU includes an EHT-SIG-A and an EHT-SIG-B, and the indication subfield may be located in the EHT-SIG-A or the EHT-SIG-B. For example, FIG. 16 is a schematic structural diagram of yet another PPDU according to an embodiment of this application. In FIG. 16, an example in which the indication subfield is located in the EHT-SIG-A is used for description. In this case, the PPDU includes an L-STF, an L-LTF, an L-SIG field, a symbol for auto-detection field, an EHT-SIG-A, an EHT-STF, an EHT-LTF, a data field, and a PE field that are sequentially arranged, and the indication subfield is located in the EHT-SIG-A.

In the first case, the indication subfield may be directly used to indicate that the modulation schemes of the plurality of space-time streams are equal modulation and also indicate a same MCS of the plurality of space-time streams. In this way, reuse of the value of the MCS field can be implemented. In other words, one value has two indication meanings, and a quantity of bits of the MCS field can be reduced, thereby reducing transmission overheads of the PPDU.

In a second case, when a value of the indication subfield is a special value, the MCS field further includes at least one MCS subfield, the indication subfield is used to indicate that the modulation schemes of the plurality of space-time streams are unequal modulation schemes, and each MCS subfield is used to indicate an MCS of at least one space-time stream/space-time stream group. The special value is different from a value used to indicate an actual MCS, and cannot indicate an MCS. In other words, the special value is not a valid value. For example, the special value may be a reserved value in the MCS field. For example, in Table 8, the special value may be 15. When the value of the indication subfield is 15, the MCS field further includes the at least one MCS subfield, the special value 15 is used to indicate that the modulation schemes of the plurality of space-time streams are unequal modulation, and the at least one MCS subfield is used to indicate the MCS of the at least one space-time stream.

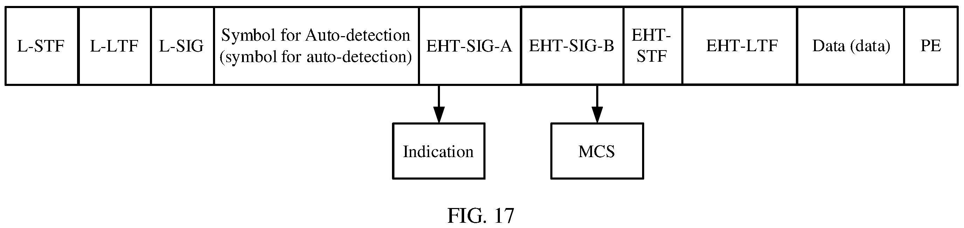

For the second case, as described in step 301, the MCS field may include one MCS subfield or a plurality of MCS subfields. When the MCS field includes one MCS subfield, the MCS subfield is used to separately indicate MCSs of the plurality of space-time streams. When the MCS field includes a plurality of MCS subfields, each MCS subfield is used to indicate an MCS of one space-time stream. For example, FIG. 17 is a schematic structural diagram of yet another PPDU according to an embodiment of this application. In FIG. 17, an example in which the MCS field includes one MCS subfield is used for description. It is assumed that the PPDU includes K space-time streams. The PPDU includes an L-STF, an L-LTF, an L-SIG field, a symbol for auto-detection field, an EHT-SIG-A, an EHT-SIG-B, an EHT-STF, an EHT-LTF, a data field, and a PE field that are sequentially arranged, the indication subfield is located in the EHT-SIG-A, the MCS subfield is located in the EHT-SIG-B, and the MCS subfield is used to separately indicate MCSs of the K space-time streams. Optionally, in the MCS subfield, a value that is used to indicate an MCS of the first space-time stream may be located in the EHT-SIG-A, and K-1values that are used to indicate MCSs of the other K-1 space-time streams may be located in the EHT-SIG-B, provided that it is ensured that an arrangement sequence of the values in the MCS subfield is in a one-to-one correspondence with an arrangement sequence of the indicated space-time streams. This is not limited in this embodiment of this application.

When the PPDU includes a plurality of space-time stream groups, in a first case, when a value of the indication subfield is a valid value, the indication subfield is used to indicate that modulation schemes of the plurality of space-time stream groups are equal modulation, and indicate that the MCS is used for the plurality of space-time stream groups. A preamble of the PPDU includes an EHT-SIG-A and an EHT-SIG-B. The MCS field may be located in the EHT-SIG-A or the EHT-SIG-B. For a structure of the preamble of the PPDU, refer to the structure shown in FIG. 16. Details are not described herein in this embodiment of this application. In the first case, the indication subfield may be directly used to indicate that the modulation schemes of the plurality of space-time stream groups are equal modulation and also indicate a same MCS of the plurality of space-time stream groups. In this way, reuse of the value of the MCS field can be implemented. In other words, one value has two indication meanings, and a quantity of bits of the MCS field can be reduced, thereby reducing transmission overheads of the PPDU. It should be noted that, for a grouping status of the plurality of space-time stream groups, refer to the grouping status in step 205 to step 207. The grouping status may be preset or agreed on in advance (refer to related content in step 205 to step 207), or may be carried in an NSTS field or an MCS field, or may be configured during networking of a data transmission system.

In a second case, when a value of the indication subfield is a special value, the MCS field further includes at least one MCS subfield, the indication subfield is used to indicate that the modulation schemes of the plurality of space-time stream groups are unequal modulation schemes, and each MCS subfield is used to indicate an MCS of at least one space-time stream group. The special value is different from a value used to indicate an actual MCS, and cannot indicate an MCS. For example, as shown in Table 8, the special value may be 15. The MCS field may include one MCS subfield or a plurality of MCS subfields. When the MCS field includes one MCS subfield, the MCS subfield is used to separately indicate MCSs of the plurality of space-time stream groups. When the MCS field includes a plurality of MCS subfields, each MCS subfield is used to indicate an MCS of one space-time stream group. The indication subfield may be located in the EHT-SIG-A, and the at least one MCS subfield may be located in the EHT-SIG-B. For a structure of the PPDU, refer to the structure shown in FIG. 17. Details are not described herein again in this embodiment of this application.

Step 402: The transmit end sends the PPDU.

For example, the transmit end may send the PPDU based on the 802.11 series protocols of a WLAN.

Step 403: A receive end receives the PPDU.

For example, the receive end may receive the PPDU based on the 802.11 series protocols of the WLAN.

Step 404: The receive end determines MCSs of a plurality of space-time streams/space-time stream groups based on the received PPDU.

For example, when the received PPDU includes the plurality of space-time streams, corresponding to the first case in step 401, when the value of the indication subfield in the MCS field received by the receive end is the valid value, the receive end may determine, based on the value of the indication subfield, that the modulation schemes of the plurality of space-time streams are equal modulation, and determine the same MCS of the plurality of space-time streams.

Corresponding to the second case in step 401, when the value of the indication subfield in the MCS field received by the receive end is the special value, and the MCS field further includes the at least one MCS subfield, the receive end may determine, based on the value of the indication subfield, that the modulation schemes of the plurality of space-time streams are unequal modulation, and determine the MCS of each space-time stream based on the MCS subfield. For a process in which the receive end determines the MCS of each space-time stream, refer to step 304. Details are not described herein again in this embodiment of this application.

For example, when the received PPDU includes the plurality of space-time stream groups, corresponding to the first case in step 401, when the value of the indication subfield in the MCS field received by the receive end is the valid value, the receive end may determine, based on the value of the indication subfield, that the modulation schemes of the plurality of space-time stream groups are equal modulation, and determine the same MCS of the plurality of space-time stream groups.

Corresponding to the second case in step 401, when the value of the indication subfield in the MCS field received by the receive end is the special value, and the MCS field further includes the at least one MCS subfield, the receive end may determine, based on the value of the indication subfield, that the modulation schemes of the plurality of space-time stream groups are unequal modulation, and determine the MCS of each space-time stream group based on the MCS subfield. For a process in which the receive end determines the MCS of each space-time stream group, refer to step 304. Details are not described herein again in this embodiment of this application.

In the third implementation, when the value of the indication subfield is the special value, a structure of the MCS field except the indication subfield in this embodiment may be replaced with a structure of any MCS field in the embodiment corresponding to the first implementation. In an example, the MCS field in this embodiment includes the indication subfield, the MCS subfield, and the at least one difference MCS subfield (that is, in the MCS field in this embodiment, the at least one MCS subfield is one MCS subfield, and the at least one difference MCS subfield is further included). For structures and functions of the MCS subfield and the at least one difference MCS subfield, refer to the structures and the functions of the subfields in the MCS shown in FIG. 5. In another example, the MCS field in this embodiment includes the indication subfield, the MCS subfield, and the difference MCS index subfield (that is, in the MCS field in this embodiment, the at least one MCS subfield is one MCS subfield, and the at least one difference MCS index subfield is further included). For structures and functions of the MCS subfield and the difference MCS index subfield, refer to the structures and the functions of the subfields in the MCS shown in FIG. 6. In still another example, the MCS field in this embodiment includes the indication subfield and the difference MCS index subfield (that is, in the MCS field in this embodiment, the at least one MCS subfield is one MCS subfield, and a function of the MCS subfield is the same as a function of the difference MCS index subfield). For a structure and the function of the difference MCS index subfield, refer to the structure and the function of the subfield in the MCS shown in FIG. 7. Details are not described herein again in this embodiment of this application.

It should be noted that the foregoing embodiments of this application are described by using an example in which the MCS of the transmit end and the receive end are obtained through table lookup. During actual implementation, the transmit end and the receive end may further agree on a same calculation rule, and determine the MCS according to the calculation rule, provided that it is ensured that the MCS indicated in the first PPDU generated by the transmit end is consistent with the MCS indicated in the first PPDU received by the receive end. For example, both the transmit end and the receive end store an MCS calculation formula. The MCS indicated by using the MCS field can be obtained by substituting the value of the MCS field in the first PPDU into the MCS calculation formula. This is not limited in this embodiment of this application.

It should be noted that, in a related technology, different values of the MCS field are used to indicate an MCS of each space-time stream based on different modulation schemes. For example, when the value of the MCS field falls within a range from 0 to 31, an MCS of each space-time stream based on the equal modulation scheme is indicated. When the value of the MCS field falls within a range from 32 to 76, an MCS of each space-time stream based on the unequal modulation scheme is indicated. In this embodiment of this application, when the value of the indication subfield is the valid value, the indication subfield may be directly used to indicate that the modulation schemes of the plurality of space-time streams are equal modulation and also indicate the same MCS of the plurality of space-time streams. In this way, reuse of the value of the MCS field can be implemented. In other words, one value has two indication meanings. When the value of the indication subfield is the special value, the MCS subfield may be used to indicate the MCS of each space-time stream based on the unequal modulation scheme, so that the MCS of each space-time stream based on two modulation schemes can be indicated by using values of a same MCS field, compared with the related technology, a value range of the MCS field is reduced, so that a quantity of bits of the MCS field is reduced, and transmission overheads of the PPDU are further reduced.

In conclusion, according to the information indication method provided in this embodiment of this application, when the value of the indication subfield is the valid value, the indication subfield may be directly used to indicate that the modulation schemes of the plurality of space-time streams are equal modulation and also indicate the same MCS of the plurality of space-time streams. When the value of the indication subfield is the special value, the MCS field further includes the at least one MCS subfield, the indication subfield is used to indicate that the modulation schemes of the plurality of space-time streams are unequal modulation schemes, and each MCS subfield is used to indicate the MCS of the at least one space-time stream/space-time stream group. Therefore, the value range of the MCS field is reduced, and the quantity of bits of the MCS field is further reduced, thereby reducing transmission overheads of the PPDU, so that on the premise that the transmitted PPDU includes a relatively large quantity of space-time streams and the MCS field is used to indicate a plurality of MCSs, a relatively high throughput can be achieved, thereby providing a structure of a data frame for indicating an MCS for a next-generation standard.

The foregoing describes the information indication method in the embodiments of this application. The following describes an information indication apparatus in the embodiments of this application. The information indication apparatus in the embodiments of this application includes an information indication apparatus used at a transmit end and an information indication apparatus used at a receive end. It should be understood that the information indication apparatus used at the transmit end is the transmit end in the foregoing method and has any function of the transmit end in the foregoing method, and the information indication apparatus used at the receive end is the receive end in the foregoing method and has any function of the receive end in the foregoing method.

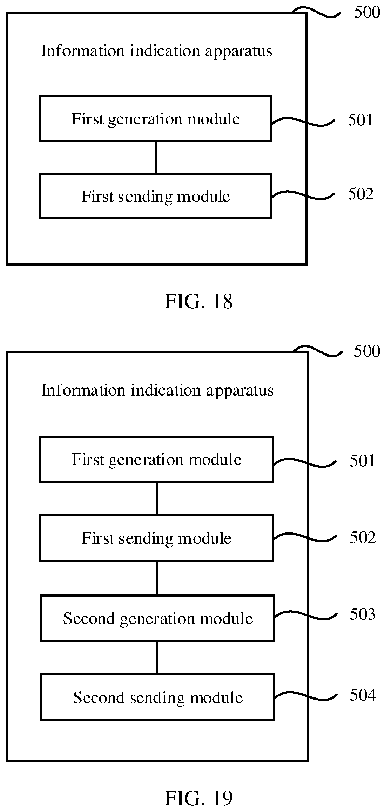

An embodiment of this application provides an information indication apparatus 500. Refer to FIG. 18. The information indication apparatus 500 may be used at a transmit end, and the apparatus includes:
a first generation module 501, configured to generate a first PPDU, where the first PPDU includes an MCS field,
the MCS field is used to indicate an MCS of a first space-time stream group and a difference MCS of another space-time stream group, and the difference MCS of the another space-time stream group is used to determine an MCS of the another space-time stream group; and
a first sending module 502, configured to send the first PPDU.

In conclusion, according to the information indication apparatus provided in this embodiment of this application, the first PPDU generated by the first generation module includes space-time stream groups and the MCS field. The MCS field is used to indicate the MCS of the first space-time stream group and the difference MCS of the another space-time stream group. The MCS field is used to indicate the MCS of the space-time stream group, an MCS of each space-time stream does not need to be indicated, the MCS field is used to indicate the difference MCS of the another space-time stream group, and a quantity of bits of the difference MCS is relatively small. Therefore, transmission overheads of a PPDU are reduced, so that on the premise that the transmitted PPDU includes a relatively large quantity of space-time streams and the MCS field is used to indicate a plurality of MCSs, a relatively high throughput can be achieved, thereby providing a structure of a data frame for indicating an MCS for a next-generation standard.

Optionally, the MCS field includes an MCS subfield and at least one difference MCS subfield, the MCS subfield is used to indicate the MCS of the first space-time stream group, and each difference MCS subfield is used to indicate a difference MCS of one other space-time stream group.

Optionally, the MCS field includes an MCS subfield and a difference MCS index subfield, the MCS subfield is used to indicate the MCS of the first space-time stream group, and the difference MCS index subfield is used to indicate the difference MCS of the another space-time stream group.

Optionally, a difference MCS of any other space-time stream group is used to indicate a difference between the any other space-time stream group and the first space-time stream group at a constellation mapping magnitude order.

Alternatively, a difference MCS of any other space-time stream group is used to indicate a difference between the any other space-time stream group and a previous space-time stream group of the any other space-time stream group at a constellation mapping magnitude order.

Optionally, the MCS field includes a difference MCS index subfield, and the difference MCS index subfield is used to indicate the MCS of the first space-time stream group and the difference MCS of the another space-time stream group.

Optionally, FIG. 19 is a block diagram of another information indication apparatus 500 according to an embodiment of this application. The apparatus 500 further includes:
a second generation module 503, configured to generate a second PPDU before the first generation module 501 generates the first PPDU, where the second PPDU includes a grouping field, and the grouping field is used to indicate a grouping status of a space-time stream group; and
a second sending module 504, configured to send the second PPDU.

Optionally, the MCS field is further used to indicate grouping statuses of the first space-time stream group and the another space-time stream group.

Optionally, the first space-time stream group and the another space-time stream group have a same code rate, and the code rate is indicated by using the MCS of the first space-time stream group.

The information indication apparatus used at a transmit end provided in this embodiment of this application is the transmit end in the foregoing method, and has any function of the transmit end in the foregoing method. For specific details, refer to the foregoing method. Details are not described herein again.

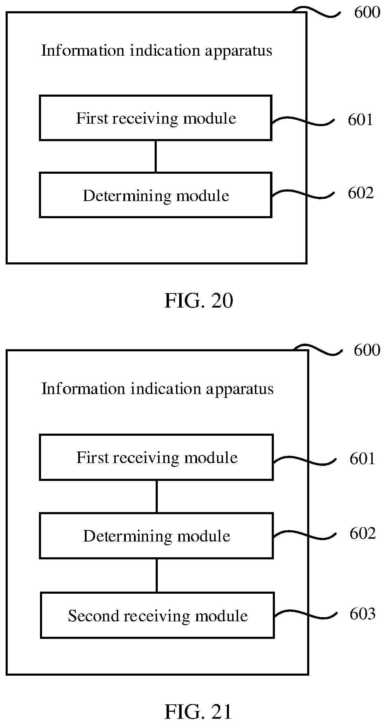

An embodiment of this application provides an information indication apparatus 600. Refer to FIG. 20. The information indication apparatus 600 may be used at a receive end, and the apparatus 600 includes:
a first receiving module 601, configured to receive a first PPDU, where the first PPDU includes an MCS field, the MCS field is used to indicate an MCS of a first space-time stream group and a difference MCS of another space-time stream group, and the difference MCS of the another space-time stream group is used to determine an MCS of the another space-time stream group; and
a determining module 602, configured to determine the MCS of the first space-time stream group and the MCS of the another space-time stream group based on the received first PPDU.

In conclusion, according to the information indication apparatus provided in this embodiment of this application, the first PPDU received by the first receiving module includes space-time stream groups and the MCS field. The MCS field is used to indicate the MCS of the first space-time stream group and the difference MCS of the another space-time stream group. The MCS field is used to indicate the MCS of the space-time stream group, an MCS of each space-time stream does not need to be indicated, the MCS field is used to indicate the difference MCS of the another space-time stream group, and a quantity of bits of the difference MCS is relatively small. Therefore, transmission overheads of a PPDU are reduced, so that on the premise that the transmitted PPDU includes a relatively large quantity of space-time streams and the MCS field is used to indicate a plurality of MCSs, a relatively high throughput can be achieved, thereby providing a structure of a data frame for indicating an MCS for a next-generation standard.

Optionally, the MCS field includes an MCS subfield and at least one difference MCS subfield, the MCS subfield is used to indicate the MCS of the first space-time stream group, and each difference MCS subfield is used to indicate a difference MCS of one other space-time stream group.

Optionally, the MCS field includes an MCS subfield and a difference MCS index subfield, the MCS subfield is used to indicate the MCS of the first space-time stream group, and the difference MCS index subfield is used to indicate the difference MCS of the another space-time stream group.

Optionally, a difference MCS of any other space-time stream group is used to indicate a difference between the any other space-time stream group and the first space-time stream group at a constellation mapping magnitude order.

Alternatively, a difference MCS of any other space-time stream group is used to indicate a difference between the any other space-time stream group and a previous space-time stream group of the any other space-time stream group at a constellation mapping magnitude order.

Optionally, the MCS field includes a difference MCS index subfield, and the difference MCS index subfield is used to indicate the MCS of the first space-time stream group and the difference MCS of the another space-time stream group.

Optionally, FIG. 21 is a block diagram of yet another information indication apparatus 600 according to an embodiment of this application. The apparatus 600 further includes:
a second receiving module 603, configured to receive a second PPDU before a first receiving module 601 receives a first PPDU, where the second PPDU includes a grouping field, and the grouping field is used to indicate a grouping status of a space-time stream group.

Optionally, the MCS field is further used to indicate grouping statuses of a first space-time stream group and another space-time stream group.

Optionally, the first space-time stream group and the another space-time stream group have a same code rate, and the code rate is indicated by using an MCS of the first space-time stream group.

The information indication apparatus used at a receive end provided in this embodiment of this application is the receive end in the foregoing method, and has any function of the receive end in the foregoing method. For specific details, refer to the foregoing method. Details are not described herein again.

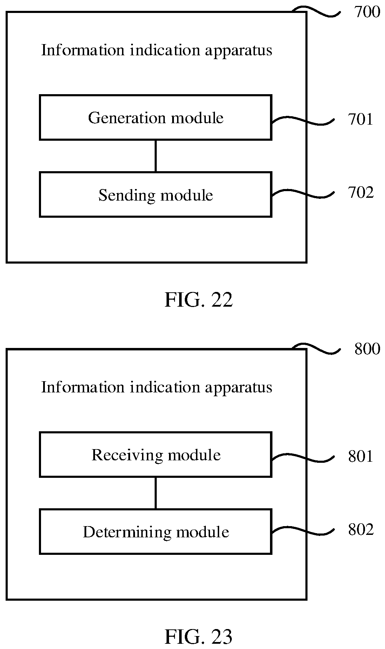

An embodiment of this application provides an information indication apparatus 700. Refer to FIG. 22. The information indication apparatus 700 may be used at a transmit end, and the apparatus 700 includes:
a generation module 701, configured to generate a PPDU, where the PPDU includes an MCS field, the MCS field includes an indication subfield and at least one MCS subfield, the indication subfield is used to indicate modulation schemes of a plurality of space-time streams/space-time stream groups, and each MCS subfield is used to indicate an MCS of at least one space-time stream/space-time stream group; and
a sending module 702, configured to send the PPDU.

In conclusion, according to the information indication apparatus provided in this embodiment of this application, the indication subfield in the MCS field in the PPDU generated by the generation module is used to indicate whether a modulation scheme is equal modulation or unequal modulation, and the MCS subfield is used to indicate an MCS of each space-time stream/space-time stream group in the PPDU based on the modulation scheme indicated by using the indication subfield. Therefore, a value range of the MCS field is reduced, and a quantity of bits of the MCS field is further reduced, thereby reducing transmission overheads of the PPDU, so that on the premise that the transmitted PPDU includes a relatively large quantity of space-time streams and the MCS field is used to indicate a plurality of MCSs, a relatively high throughput can be achieved, thereby providing a structure of a data frame for indicating an MCS for a next-generation standard.

Optionally, when a value of the indication subfield is a first value, the indication subfield is used to indicate that the modulation schemes of the plurality of space-time streams/space-time stream groups are equal modulation schemes, and the MCS subfield is used to indicate a same MCS of the plurality of space-time streams/space-time stream groups.

Alternatively, when a value of the indication subfield is a second value, the indication subfield is used to indicate that the modulation schemes of the plurality of space-time streams/space-time stream groups are unequal modulation schemes, and the MCS subfield is used to indicate an MCS of at least one space-time stream/space-time stream group.

Optionally, when the value of the indication subfield is the second value, the MCS field includes a plurality of MCS subfields, and each MCS subfield is used to indicate an MCS of one space-time stream/space-time stream group; or the MCS field includes one MCS subfield, and the MCS subfield is used to separately indicate MCSs of the plurality of space-time streams/space-time stream groups.

The information indication apparatus used at the transmit end provided in this embodiment of this application is the transmit end in the foregoing method, and has any function of the transmit end in the foregoing method. For specific details, refer to the foregoing method. Details are not described herein again.

An embodiment of this application provides an information indication apparatus 800. Refer to FIG. 23. The information indication apparatus 800 may be used at a receive end, and the apparatus 800 includes:
a receiving module 801, configured to receive a PPDU, where the PPDU includes an MCS field, the MCS field includes an indication subfield and at least one MCS subfield, the indication subfield is used to indicate modulation schemes of a plurality of space-time streams/space-time stream groups, and each MCS subfield is used to indicate an MCS of at least one space-time stream/space-time stream group; and
a determining module 802, configured to determine MCSs of the plurality of space-time streams/space-time stream groups based on the received PPDU.

In conclusion, according to the information indication apparatus provided in this embodiment of this application, the indication subfield in the MCS field in the PPDU received by the receiving module is used to indicate whether a modulation scheme is equal modulation or unequal modulation, and the MCS subfield is used to indicate an MCS of each space-time stream/space-time stream group in the PPDU based on the modulation scheme indicated by using the indication subfield. Therefore, a value range of the MCS field is reduced, and a quantity of bits of the MCS field is further reduced, thereby reducing transmission overheads of the PPDU, so that on the premise that the transmitted PPDU includes a relatively large quantity of space-time streams and the MCS field is used to indicate a plurality of MCSs, a relatively high throughput can be achieved, thereby providing a structure of a data frame for indicating an MCS for a next-generation standard.

Optionally, when a value of the indication subfield is a first value, the indication subfield is used to indicate that the modulation schemes of the plurality of space-time streams/space-time stream groups are equal modulation schemes, and the MCS subfield is used to indicate a same MCS of the plurality of space-time streams/space-time stream groups.

Alternatively, when a value of the indication subfield is a second value, the indication subfield is used to indicate that the modulation schemes of the plurality of space-time streams/space-time stream groups are unequal modulation schemes, and the MCS subfield is used to indicate an MCS of at least one space-time stream/space-time stream group.

Optionally, when the value of the indication subfield is the second value, the MCS field includes a plurality of MCS subfields, and each MCS subfield is used to indicate an MCS of one space-time stream/space-time stream group; or the MCS field includes one MCS subfield, and the MCS subfield is used to separately indicate MCSs of the plurality of space-time streams/space-time stream groups.

The information indication apparatus used at the receive end provided in this embodiment of this application is the receive end in the foregoing method, and has any function of the receive end in the foregoing method. For specific details, refer to the foregoing method. Details are not described herein again.

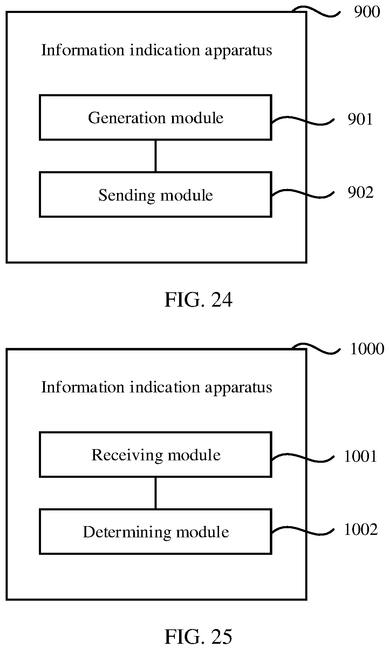

An embodiment of this application provides an information indication apparatus 900. Refer to FIG. 24. The information indication apparatus 900 may be used at a transmit end, and the apparatus 900 includes:
a generation module 901, configured to generate a PPDU, where the PPDU includes an MCS field, the MCS field includes an indication subfield, and when a value of the indication subfield is a valid value, the indication subfield is used to indicate that modulation schemes of a plurality of space-time streams/space-time stream groups are equal modulation and indicate that the plurality of space-time streams/space-time stream groups all use the MCS, or when a value of the indication subfield is a special value, the MCS field further includes at least one MCS subfield, the indication subfield is used to indicate that modulation schemes of a plurality of space-time streams/space-time stream groups are unequal modulation schemes, and each MCS subfield is used to indicate an MCS of at least one space-time stream/space-time stream group; and
a sending module 902, configured to send the PPDU.

In conclusion, according to the information indication apparatus provided in this embodiment of this application, when the value of the indication subfield in the MCS field in the PPDU generated by the generation module is the valid value, the indication subfield may be directly used to indicate that the modulation schemes of the plurality of space-time streams are equal modulation and also indicate a same MCS of the plurality of space-time streams. When the value of the indication subfield is the special value, the MCS field further includes the at least one MCS subfield, the indication subfield is used to indicate that the modulation schemes of the plurality of space-time streams are unequal modulation schemes, and each MCS subfield is used to indicate the MCS of the at least one space-time stream/space-time stream group. Therefore, a value range of the MCS field is reduced, and a quantity of bits of the MCS field is further reduced, thereby reducing transmission overheads of the PPDU, so that on the premise that the transmitted PPDU includes a relatively large quantity of space-time streams and the MCS field is used to indicate a plurality of MCSs, a relatively high throughput can be achieved, thereby providing a structure of a data frame for indicating an MCS for a next-generation standard.

The information indication apparatus used at the transmit end provided in this embodiment of this application is the transmit end in the foregoing method, and has any function of the transmit end in the foregoing method. For specific details, refer to the foregoing method. Details are not described herein again.

An embodiment of this application provides an information indication apparatus 1000. Refer to FIG. 25. The information indication apparatus 1000 may be used at a receive end. The apparatus 1000 includes:
a receiving module 1001, configured to receive a PPDU, where the PPDU includes an MCS field, the MCS field includes an indication subfield, and when a value of the indication subfield is a valid value, the indication subfield is used to indicate that modulation schemes of a plurality of space-time streams/space-time stream groups are equal modulation and indicate that the plurality of space-time streams/space-time stream groups all use the MCS, or when a value of the indication subfield is a special value, the MCS field further includes at least one MCS subfield, the indication subfield is used to indicate that modulation schemes of a plurality of space-time streams/space-time stream groups are unequal modulation schemes, and each MCS subfield is used to indicate an MCS of at least one space-time stream/space-time stream group; and
a determining module 1002, configured to determine MCSs of the plurality of space-time streams/space-time stream groups based on the received PPDU.

In conclusion, according to the information indication apparatus provided in this embodiment of this application, when the value of the indication subfield in the MCS field in the PPDU received by the receiving module is the valid value, the indication subfield may be directly used to indicate that the modulation schemes of the plurality of space-time streams are equal modulation and also indicate a same MCS of the plurality of space-time streams. When the value of the indication subfield is the special value, the MCS field further includes the at least one MCS subfield, the indication subfield is used to indicate that the modulation schemes of the plurality of space-time streams are unequal modulation schemes, and each MCS subfield is used to indicate the MCS of the at least one space-time stream/space-time stream group. Therefore, a value range of the MCS field is reduced, and a quantity of bits of the MCS field is further reduced, thereby reducing transmission overheads of the PPDU, so that on the premise that the transmitted PPDU includes a relatively large quantity of space-time streams and the MCS field is used to indicate a plurality of MCSs, a relatively high throughput can be achieved, thereby providing a structure of a data frame for indicating an MCS for a next-generation standard.

The information indication apparatus used at the receive end provided in this embodiment of this application is the receive end in the foregoing method, and has any function of the receive end in the foregoing method. For specific details, refer to the foregoing method. Details are not described herein again.

The foregoing describes the information indication apparatus used at the transmit end and the information indication apparatus used at the receive end in the embodiments of this application. The following describes possible product forms of the information indication apparatus used at the transmit end and the information indication apparatus used at the receive end. It should be understood that a product, in any form, that has the feature of the information indication apparatus used at the transmit end described in FIG. 18, FIG. 19, FIG. 22, or FIG. 24 and a product, in any form, that has the feature of the information indication apparatus used at the receive end described in FIG. 20, FIG. 21, FIG. 23, or FIG. 25 fall within the protection scope of this application. It should be further understood that the following description is merely an example, and does not limit a product form of the information indication apparatus used at the transmit end and a product form of the information indication apparatus used at the receive end in the embodiments of this application.

In a possible product form, the information indication apparatus used at the transmit end and the information indication apparatus used at the receive end in the embodiments of this application may be implemented by using a general bus architecture.

The information indication apparatus used at the transmit end includes a processor and a transceiver that is internally connected to and communicates with the processor. In a first implementation, the processor is configured to generate a first PPDU, where the first PPDU includes an MCS field, the MCS field is used to indicate an MCS of a first space-time stream group and a difference MCS of another space-time stream group, and the difference MCS of the another space-time stream group is used to determine an MCS of the another space-time stream group. The transceiver is configured to send the first PPDU. In a second implementation, the processor is configured to generate a PPDU, where the PPDU includes an MCS field, the MCS field includes an indication subfield and at least one MCS subfield, the indication subfield is used to indicate modulation schemes of a plurality of space-time streams/space-time stream groups, and each MCS subfield is used to indicate an MCS of at least one space-time stream/space-time stream group. The transceiver is configured to send the PPDU. In a third implementation, the processor is configured to generate a PPDU, where the PPDU includes an MCS field, the MCS field includes an indication subfield, and when a value of the indication subfield is a valid value, the indication subfield is used to indicate that modulation schemes of a plurality of space-time streams/space-time stream groups are equal modulation and indicate that the plurality of space-time streams/space-time stream groups all use the MCS, or when a value of the indication subfield is a special value, the MCS field further includes at least one MCS subfield, the indication subfield is used to indicate that modulation schemes of a plurality of space-time streams/space-time stream groups are unequal modulation schemes, and each MCS subfield is used to indicate an MCS of at least one space-time stream/space-time stream group. The transceiver is configured to send the PPDU. Optionally, the information indication apparatus used at the transmit end may further include a memory, and the memory is configured to store instructions executed by the processor.

The information indication apparatus used at the receive end includes a processor and a transceiver that is internally connected to and communicates with the processor.

Corresponding to the first implementation, the transceiver is configured to receive a first PPDU, where the first PPDU includes an MCS field, the MCS field is used to indicate an MCS of a first space-time stream group and a difference MCS of another space-time stream group, and the difference MCS of the another space-time stream group is used to determine an MCS of the another space-time stream group. The processor is configured to determine the MCS of the first space-time stream group and the MCS of the another space-time stream group based on the first PPDU. Corresponding to the second implementation, the transceiver is configured to receive a PPDU, where the PPDU includes an MCS field, the MCS field includes an indication subfield and at least one MCS subfield, the indication subfield is used to indicate modulation schemes of a plurality of space-time streams/space-time stream groups, and each MCS subfield is used to indicate an MCS of at least one space-time stream/space-time stream group. The processor is configured to determine MCSs of the plurality of space-time streams/space-time stream groups based on the received PPDU. Corresponding to the third implementation, the transceiver is configured to receive a PPDU, where the PPDU includes an MCS field, the MCS field includes an indication subfield, and when a value of the indication subfield is a valid value, the indication subfield is used to indicate that modulation schemes of a plurality of space-time streams/space-time stream groups are equal modulation and indicate that the plurality of space-time streams/space-time stream groups all use the MCS, or when a value of the indication subfield is a special value, the MCS field further includes at least one MCS subfield, the indication subfield is used to indicate that modulation schemes of a plurality of space-time streams/space-time stream groups are unequal modulation schemes, and each MCS subfield is used to indicate an MCS of at least one space-time stream/space-time stream group. The processor is configured to determine MCSs of the plurality of space-time streams/space-time stream groups based on the received PPDU. Optionally, the information indication apparatus used at the receive end may further include a memory, and the memory is configured to store instructions executed by the processor.

In a possible product form, the information indication apparatus used at the transmit end and the information indication apparatus used at the receive end in the embodiments of this application may be implemented by using a general-purpose processor.

The general-purpose processor used to implement the information indication apparatus used at the transmit end includes a processing circuit and an output interface that is internally connected to and communicates with the processing circuit. In a first implementation, the processing circuit is configured to generate a first PPDU, where the first PPDU includes an MCS field, the MCS field is used to indicate an MCS of a first space-time stream group and a difference MCS of another space-time stream group, and the difference MCS of the another space-time stream group is used to determine an MCS of the another space-time stream group. The output interface is configured to send the first PPDU. In a second implementation, the processing circuit is configured to generate a PPDU, where the PPDU includes an MCS field, the MCS field includes an indication subfield and at least one MCS subfield, the indication subfield is used to indicate modulation schemes of a plurality of space-time streams/space-time stream groups, and each MCS subfield is used to indicate an MCS of at least one space-time stream/space-time stream group. The output interface is configured to send the PPDU. In a third implementation, the processing circuit is configured to generate a PPDU, where the PPDU includes an MCS field, the MCS field includes an indication subfield, and when a value of the indication subfield is a valid value, the indication subfield is used to indicate that modulation schemes of a plurality of space-time streams/space-time stream groups are equal modulation and indicate that the plurality of space-time streams/space-time stream groups all use the MCS, or when a value of the indication subfield is a special value, the MCS field further includes at least one MCS subfield, the indication subfield is used to indicate that modulation schemes of a plurality of space-time streams/space-time stream groups are unequal modulation schemes, and each MCS subfield is used to indicate an MCS of at least one space-time stream/space-time stream group. The output interface is configured to send the PPDU. Optionally, the general-purpose processor may further include a storage medium, and the storage medium is configured to store instructions executed by the processing circuit.

The general-purpose processor used to implement the information indication apparatus used at the receive end includes a processing circuit and an input interface that is internally connected to and communicates with the processing circuit. Corresponding to the first implementation, the input interface is configured to receive a first PPDU, where the first PPDU includes an MCS field, the MCS field is used to indicate an MCS of a first space-time stream group and a difference MCS of another space-time stream group, and the difference MCS of the another space-time stream group is used to determine an MCS of the another space-time stream group. The processing circuit is configured to determine the MCS of the first space-time stream group and the MCS of the another space-time stream group based on the first PPDU. Corresponding to the second implementation, the input interface is configured to receive a PPDU, where the PPDU includes an MCS field, the MCS field includes an indication subfield and at least one MCS subfield, the indication subfield is used to indicate modulation schemes of a plurality of space-time streams/space-time stream groups, and each MCS subfield is used to indicate an MCS of at least one space-time stream/space-time stream group. The processing circuit is configured to determine MCSs of the plurality of space-time streams/space-time stream groups based on the received PPDU. Corresponding to the third implementation, the input interface is configured to receive a PPDU, where the PPDU includes an MCS field, the MCS field includes an indication subfield, and when a value of the indication subfield is a valid value, the indication subfield is used to indicate that modulation schemes of a plurality of space-time streams/space-time stream groups are equal modulation and indicate that the plurality of space-time streams/space-time stream groups all use the MCS, or when a value of the indication subfield is a special value, the MCS field further includes at least one MCS subfield, the indication subfield is used to indicate that modulation schemes of a plurality of space-time streams/space-time stream groups are unequal modulation schemes, and each MCS subfield is used to indicate an MCS of at least one space-time stream/space-time stream group. The processing circuit is configured to determine MCSs of the plurality of space-time streams/space-time stream groups based on the received PPDU. Optionally, the general-purpose processor may further include a storage medium, and the storage medium is configured to store instructions executed by the processing circuit.

In a possible product form, the information indication apparatus used at the transmit end and the information indication apparatus used at the receive end in the embodiments of this application may be further implemented by using the following: one or more field-programmable gate arrays (Field-Programmable Gate Array, FPGA), a programmable logic device (programmable logic device, PLD), a controller, a state machine, gate logic, a discrete hardware component, any other suitable circuit, or any combination of circuits that can perform various functions described in this application.

It should be understood that the information indication apparatus used at the transmit end and the information indication apparatus used at the receive end in the foregoing product forms respectively have any function of the transmit end and any function of the receive end in the foregoing method embodiments. Details are not described herein again.

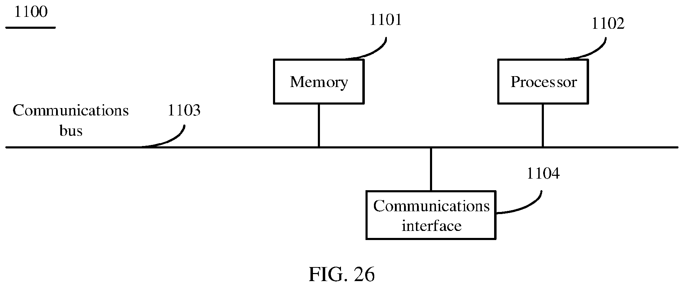

An embodiment of this application provides an information indication apparatus. Refer to FIG. 26. The information indication apparatus is used at a transmit end or a receive end. As shown in FIG. 26, the information indication apparatus 1100 includes a memory 1101, a processor 1102, and a computer program that is stored in the memory 1101 and that is executable on the processor 1102. When executing the computer program, the processor 1102 implements the information indication method described in the method embodiment of this application.

Optionally, the apparatus 1100 further includes a communications bus 1103 and a communications interface 1104.

The processor 1102 includes one or more processing cores. The processor 1102 runs the computer program and a unit, to perform various functional applications and data processing.

The memory 1101 may be configured to store the computer program and the unit. Specifically, the memory may store an operating system and an application program unit required for at least one function. The operating system may be an operating system such as a real-time operating system (Real Time executive, RTX), LINUX, UNIX, WINDOWS, or OSX X.

There may be a plurality of communications interfaces 1104. The communications interface 1104 is configured to communicate with another storage device or a network device. For example, in this embodiment of this application, the communications interface 1104 may be configured to receive and send a PPDU. The communications interface 1104 may be a transceiver.

The memory 1101 and the communications interface 1104 are separately connected to the processor 1102 through the communications bus 1103.

An embodiment of this application provides a data transmission system, including a sending device and a receiving device. The sending device may include the information indication apparatus shown in FIG. 18, FIG. 19, FIG. 22, or FIG. 24, and the receiving device includes the information indication apparatus shown in FIG. 20, FIG. 21, FIG. 23, or FIG. 25. For example, for a structure of the data transmission system, refer to FIG. 1 or FIG. 2.

It should be understood that, the character "/" in this specification usually represents an "or" relationship between the associated objects.

A person of ordinary skill in the art may be aware that, the method steps and the units described in the embodiments disclosed in this specification can be implemented by electronic hardware, computer software, or a combination thereof. To clearly describe interchangeability between the hardware and the software, the foregoing has generally described steps and compositions of each embodiment based on functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or the communications connections between the apparatuses or the units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments of this application.

In addition, functional units in the embodiments of this application may be integrated into one processing unit, or each of the units may exist alone physically, or two or more units are integrated into one unit. The foregoing integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions in this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. An information indication method, wherein the method comprises:
generating a first physical layer protocol data unit PPDU, wherein the first PPDU comprises a modulation and coding scheme MCS field, the MCS field is used to indicate an MCS of a first space-time stream group and a difference MCS of another space-time stream group, and the difference MCS of the another space-time stream group is used to determine an MCS of the another space-time stream group; and
sending the first PPDU.

2. The method according to claim 1, wherein before the generating a first physical layer protocol data unit PPDU, the method further comprises:
generating a second PPDU, wherein the second PPDU comprises a grouping field, and the grouping field is used to indicate a grouping status of a space-time stream group; and
sending the second PPDU.

3. An information indication method, wherein the method comprises:
receiving a first physical layer protocol data unit PPDU, wherein the first PPDU comprises a modulation and coding scheme MCS field, the MCS field is used to indicate an MCS of a first space-time stream group and a difference MCS of another space-time stream group, and the difference MCS of the another space-time stream group is used to determine an MCS of the another space-time stream group; and
determining the MCS of the first space-time stream group and the MCS of the another space-time stream group based on the received first PPDU.

4. The method according to claim 3, wherein before the receiving a first physical layer protocol data unit PPDU, the method further comprises:
receiving a second PPDU, wherein the second PPDU comprises a grouping field, and the grouping field is used to indicate a grouping status of a space-time stream group.

5. The method according to any one of claims 1 to 4, wherein
the MCS field comprises an MCS subfield and at least one difference MCS subfield, the MCS subfield is used to indicate the MCS of the first space-time stream group, and each difference MCS subfield is used to indicate a difference MCS of one other space-time stream group.

6. The method according to any one of claims 1 to 4, wherein
the MCS field comprises an MCS subfield and a difference MCS index subfield, the MCS subfield is used to indicate the MCS of the first space-time stream group, and the difference MCS index subfield is used to indicate the difference MCS of the another space-time stream group.

7. The method according to claim 5 or 6, wherein
a difference MCS of any other space-time stream group is used to indicate a difference between the any other space-time stream group and the first space-time stream group at a constellation mapping magnitude order; or
a difference MCS of any other space-time stream group is used to indicate a difference between the any other space-time stream group and a previous space-time stream group of the any other space-time stream group at a constellation mapping magnitude order.

8. The method according to any one of claims 1 to 4, wherein
the MCS field comprises a difference MCS index subfield, and the difference MCS index subfield is used to indicate the MCS of the first space-time stream group and the difference MCS of the another space-time stream group.

9. The method according to any one of claims 1, 3, and 5 to 8, wherein the MCS field is further used to indicate grouping statuses of the first space-time stream group and the another space-time stream group.

10. The method according to any one of claims 1 to 9, wherein the first space-time stream group and the another space-time stream group have a same code rate, and the code rate is indicated by using the MCS of the first space-time stream group.

11. An information indication apparatus, wherein the apparatus comprises:
a first generation module, configured to generate a first physical layer protocol data unit PPDU, wherein the first PPDU comprises a modulation and coding scheme MCS field, the MCS field is used to indicate an MCS of a first space-time stream group and a difference MCS of another space-time stream group, and the difference MCS of the another space-time stream group is used to determine an MCS of the another space-time stream group; and
a first sending module, configured to send the first PPDU.

12. The apparatus according to claim 11, wherein the apparatus further comprises:
a second generation module, configured to generate a second PPDU before the first generation module generates the first physical layer protocol data unit PPDU, wherein the second PPDU comprises a grouping field, and the grouping field is used to indicate a grouping status of a space-time stream group; and
a second sending module, configured to send the second PPDU.

13. An information indication apparatus, wherein the apparatus comprises:
a first receiving module, configured to receive a first physical layer protocol data unit PPDU, wherein the first PPDU comprises a modulation and coding scheme MCS field, the MCS field is used to indicate an MCS of a first space-time stream group and a difference MCS of another space-time stream group, and the difference MCS of the another space-time stream group is used to determine an MCS of the another space-time stream group; and
a determining module, configured to determine the MCS of the first space-time stream group and the MCS of the another space-time stream group based on the received first PPDU.

14. The apparatus according to claim 13, wherein the apparatus further comprises:
a second receiving module, configured to receive a second PPDU before the first receiving module receives the first physical layer protocol data unit PPDU, wherein the second PPDU comprises a grouping field, and the grouping field is used to indicate a grouping status of a space-time stream group.

15. The apparatus according to any one of claims 11 to 14, wherein
the MCS field comprises an MCS subfield and at least one difference MCS subfield, the MCS subfield is used to indicate the MCS of the first space-time stream group, and each difference MCS subfield is used to indicate a difference MCS of one other space-time stream group.

16. The apparatus according to any one of claims 11 to 14, wherein
the MCS field comprises an MCS subfield and a difference MCS index subfield, the MCS subfield is used to indicate the MCS of the first space-time stream group, and the difference MCS index subfield is used to indicate the difference MCS of the another space-time stream group.

17. The apparatus according to claim 15 or 16, wherein
a difference MCS of any other space-time stream group is used to indicate a difference between the any other space-time stream group and the first space-time stream group at a constellation mapping magnitude order; or
a difference MCS of any other space-time stream group is used to indicate a difference between the any other space-time stream group and a previous space-time stream group of the any other space-time stream group at a constellation mapping magnitude order.

18. The apparatus according to any one of claims 11 to 14, wherein
the MCS field comprises a difference MCS index subfield, and the difference MCS index subfield is used to indicate the MCS of the first space-time stream group and the difference MCS of the another space-time stream group.

19. The apparatus according to any one of claims 11, 13, and 15 to 18, wherein the MCS field is further used to indicate grouping statuses of the first space-time stream group and the another space-time stream group.

20. The apparatus according to any one of claims 11 to 19, wherein the first space-time stream group and the another space-time stream group have a same code rate, and the code rate is indicated by using the MCS of the first space-time stream group.

21. An information indication apparatus, comprising a processor and a transceiver that is internally connected to and communicates with the processor, wherein the processor is configured to generate a first physical layer protocol data unit PPDU, wherein the first PPDU comprises a modulation and coding scheme MCS field, the MCS field is used to indicate an MCS of a first space-time stream group and a difference MCS of another space-time stream group, and the difference MCS of the another space-time stream group is used to determine an MCS of the another space-time stream group; and the transceiver is configured to send the first PPDU.

22. The apparatus according to claim 21, wherein the processor is further configured to generate a second PPDU, and the transceiver is further configured to send the second PPDU, wherein the second PPDU comprises a grouping field, and the grouping field is used to indicate a grouping status of a space-time stream group.

23. An information indication apparatus, comprising a processor and a transceiver that is internally connected to and communicates with the processor, wherein the transceiver is configured to receive a first physical layer protocol data unit PPDU, wherein the first PPDU comprises a modulation and coding scheme MCS field, the MCS field is used to indicate an MCS of a first space-time stream group and a difference MCS of another space-time stream group, and the difference MCS of the another space-time stream group is used to determine an MCS of the another space-time stream group; and the processor is configured to determine the MCS of the first space-time stream group and the MCS of the another space-time stream group based on the first PPDU.

24. The apparatus according to claim 23, wherein the transceiver is further configured to receive a second PPDU, wherein the second PPDU comprises a grouping field, and the grouping field is used to indicate a grouping status of a space-time stream group.

25. An information indication apparatus, comprising a processing circuit and an output interface that is internally connected to and communicates with the processing circuit, wherein the processing circuit is configured to generate a first physical layer protocol data unit PPDU, wherein the first PPDU comprises a modulation and coding scheme MCS field, the MCS field is used to indicate an MCS of a first space-time stream group and a difference MCS of another space-time stream group, and the difference MCS of the another space-time stream group is used to determine an MCS of the another space-time stream group; and the output interface is configured to send the first PPDU.

26. The apparatus according to claim 25, wherein the processing circuit is further configured to generate a second PPDU, and the output interface is further configured to send the second PPDU, wherein the second PPDU comprises a grouping field, and the grouping field is used to indicate a grouping status of a space-time stream group.

27. An information indication apparatus, comprising a processing circuit and an input interface that is internally connected to and communicates with the processing circuit, wherein the input interface is configured to receive a first physical layer protocol data unit PPDU, wherein the first PPDU comprises a modulation and coding scheme MCS field, the MCS field is used to indicate an MCS of a first space-time stream group and a difference MCS of another space-time stream group, and the difference MCS of the another space-time stream group is used to determine an MCS of the another space-time stream group; and the processing circuit is configured to determine the MCS of the first space-time stream group and the MCS of the another space-time stream group based on the first PPDU.

28. The apparatus according to claim 27, wherein the input interface is further configured to receive a second PPDU, wherein the second PPDU comprises a grouping field, and the grouping field is used to indicate a grouping status of a space-time stream group.

29. A computer-readable storage medium, configured to store a computer program, wherein the computer program comprises instructions used to perform the method according to any one of claims 1 to 10.

30. A computer program, wherein the computer program comprises instructions used to perform the method according to any one of claims 1 to 10.

31. A data transmission system, comprising a sending device and a receiving device, wherein the sending device comprises the information indication apparatus according to claim 11 or 12, and the receiving device comprises the information indication apparatus according to claim 13 or 14; or
the sending device comprises the information indication apparatus according to claim 21 or 22, and the receiving device comprises the information indication apparatus according to claim 23 or 24; or
the sending device comprises the information indication apparatus according to claim 25 or 26, and the receiving device comprises the information indication apparatus according to claim 27 or 28.
